# EUROPEAN PATENT APPLICATION

(11) **EP 4 109 877 A1**
(43) Date of publication of application: **28.12.2022**
(21) Application number: 21757781.6
(22) Date of filing: 18.01.2021
(51) Int. Cl.: H04N 5/232, H04N 5/765, H04N 5/92, G06T 1/00, G06F 3/0484

(54) **INFORMATION PROCESSING METHOD, SERVER DEVICE, AND PROGRAM**

(30) Priority: 17.02.2020 JP 2020024624
(71) Applicant: Sony Group Corporation, Minato-Ku, Tokyo, 108-0075 (JP)
(72) Inventor: MURATA, Yuki, Tokyo 108-0075 (JP); CHIBA, Ayako, Tokyo 108-0075 (JP); KAWATA, Haruka, Tokyo 108-0075 (JP); KATO, Ryoko, Tokyo 108-0075 (JP); HASEGAWA, Shin, Tokyo 108-0075 (JP); SUZUKI, Ryo, Tokyo 108-0075 (JP); BAMBA, Sadamichi, Tokyo 108-0075 (JP); INAMURA, Akira, Tokyo 108-0075 (JP); ASAI, Satoshi, Tokyo 108-0075 (JP); YOSHINAKA, Chikako, Tokyo 108-0075 (JP); SUGAWARA, Taku, Tokyo 108-0075 (JP)
(74) Representative: D Young & Co LLP
(86) International application number: PCT/JP2021/001516
(87) International publication number: WO 2021/166515

(57) **Abstract**

A terminal device is caused to execute an event data management process that performs a process for storing image data received via communication with an imaging device and additional information containing at least rating information corresponding to the image data, both as event data associated with a specific event, and an update process for updating the event data according to operation input, a user interface control process that controls presentation of images and the rating information associated with the event data of the specific event, and detects the operation input, and a communication control process that controls communication for synchronizing the event data of the terminal device with event data of a server device disposed outside, according to storage or update of the event data of the terminal device.

## Description

### [Technical Field]

The present technology relates to an information processing method, a server device, and a program, and particularly to a process for creating an image collection of an event.

### [Background Art]

For example, there is such a service in which a picture album as an image collection of images captured by a photographer in such an event as a wedding and a sports meeting is created and the created picture album is provided to participants or the like.

In this case, the photographer or the like imports images captured by an imaging device to a personal computer, a smartphone, or the like after the end of the event, and edits the images by using editing software or the like to create an image collection. Thereafter, this image collection is assumed to be provided using social media (SNS: social networking services), a cloud service, an e-mail, a message application, or the like.

PTL 1 identified below describes a technology which transfers images captured by a camera to a smartphone or the like to share the images.

### [Citation List]

### [Patent Literature]

[PTL 1]
Japanese Patent Laid-open No. 2016-81173

### [Summary]

### [Technical Problem]

Meanwhile, it is often the case that the participants look forward to receiving the event image collection and hope to appreciate the event image collection after the end of the event as soon as possible.

Assuming a wedding as the event, for example, a bridal pair and participants are likely to experience greater emotion if the captured images are appreciated immediately after the end of the wedding where an afterglow still remains.

However, in a case where a large volume of pictures have been taken in the wedding, for example, it is a hassle and not appropriate also for viewers to simply view these pictures in a sequential manner.

In consideration of the abovementioned circumstances, proposed according to the present technology is a technology usable for creating an image collection which is appropriately edited using selected images, for example, as quickly as possible, and providing the created image collection.

### [Solution to Problem]

An information processing method according to the present technology is directed to an information processing method performed by an information processing device. This method includes an event data management process that performs a process for storing image data received via communication with an imaging device and additional information containing at least rating information corresponding to the image data, both as event data associated with a specific event, and an update process for updating the event data according to operation input, a user interface control process that controls presentation of images and the rating information associated with the event data of the specific event and detects the operation input, and a communication control process that controls communication for synchronizing the event data of the information processing device with event data of a server device disposed outside, according to storage or update of the event data of the information processing device.

For example, in a case where the image data of the images captured by the imaging device and the additional information are sequentially transmitted via communication with the imaging device by a function of a terminal device under an application program, these data and information are stored and managed as event data associated with a specific event. Moreover, this event data is presented to a user, and an operation is received from the user. Furthermore, the event data of the information processing device is synchronized with event data of the server device disposed outside.

In the information processing method according to the present technology described above, as the event data management process, a process for acquiring the event data of the specific event from the server device in response to selection of the specific event may be performed.

For example, in a case where the user selects a specific event from a list of events in an application screen of the terminal device, event data of the specific event is acquired from the server device to display a list of images or the like.

In the information processing method according to the present technology described above, the event data may contain prior setting information, and, as the user interface control process, image display of the image data contained in the event data may be controlled, in reference to editing image data edited according to editing information contained in the prior setting information.

For example, such editing information as retouch parameters applied to respective images is set as prior information associated with a certain event. In addition, the image data added to the event data is controlled such that images edited according to the editing information can be displayed.

In the information processing method according to the present technology described above, as the user interface control process, control for providing a user interface that allows an input operation for inputting editing information associated with the image data contained in the event data may be performed, and, as the event data management process, a process for updating the event data according to the input operation for inputting the editing information may be performed.

For example, input of such editing information as retouch parameters to images of a certain event is allowed. In addition, the event data is updated such that the editing information is added or updated according to the input operation for inputting the editing information.

In the information processing method according to the present technology described above, as the user interface control process, control for providing a user interface that allows an input operation for inputting rating information associated with the image data contained in the event data may be performed, and, as the event data management process, a process for updating the event data according to the input operation for inputting the rating information may be performed.

For example, the rating information set on the imaging device side is added to images of a certain event. The rating information contained in the event data and associated with the respective images is allowed to be changed in any manner.

In the information processing method according to the present technology described above, as the user interface control process, control for providing a user interface that allows a setting operation for setting selection information for selective use of the image data contained in the event data and creation of an image collection may be performed, and, as the event data management process, a process for updating event data according to the setting operation of the selection information may be performed.

In a case where the image collection is created in reference to the event data, a camera staff makes such selections as to designate the images to be used, the image to be used as a cover, and the like. The user interface for this purpose is provided, and selection information corresponding to a setting operation is reflected in the event data.

In the information processing method according to the present technology described above, the selection information may contain use image information indicating selection as an image to be included in the image collection.

Specifically, the use image information indicating designation as images to be included in the image collection is stored in the event data in association with the images.

In the information processing method according to the present technology described above, the selection information may contain cover image information indicating selection as a cover image of the image collection.

Specifically, information indicating selection as the cover image of the image collection is stored in the event data in association with a particular image.

In the information processing method according to the present technology described above, the selection information may contain emphasis display image information indicating selection as an image to be displayed with emphasis in the image collection.

Specifically, information indicating a selection state of an image to be emphasized more than other images in the image collection, such as an image in a larger size, is stored in the event data in association with the image.

In the information processing method according to the present technology described above, it is possible to further perform an automatic setting process that automatically sets the selection information in reference to tendency information generated in reference to previous selection information associated with a user.

For example, the server device learns a setting tendency of previous selection information by the camera staff using the terminal device, and sets the tendency information. Alternatively, the terminal device itself may set the tendency information. The terminal device automatically sets the selection information in reference to the tendency information associated with the camera staff using the terminal device.

In the information processing method according to the present technology described above, it is possible to further perform an automatic setting process that automatically sets the selection information in reference to tendency information generated in reference to preference of a client user.

For example, the server device determines preference of the user corresponding to the client according to previous actions, and sets the tendency information. For example, the server device determines a tendency of preferred images according to behaviors of the client in social media, and sets the tendency information. The terminal device automatically sets the selection information in reference to the tendency information associated with the client.

A server device according to the present technology includes an event data management unit that stores event data containing image data and rating information corresponding to the image data, and manages update of the event data, in response to reception of information associated with a specific event from a terminal device.

For example, in a case where the image data of images captured by an imaging device and rating information are sequentially transmitted from the terminal device, the server device performs a process for storing and managing the image data and the rating information as the event data associated with the specific event.

In the server device according to the present technology described above, it is possible to further include an event data supply control unit that causes transmission for supply of the event data to the terminal device to be performed.

For example, in a case where the user selects a specific event from a list of events in an application screen of the terminal device, event data of the specific event is transmitted to the terminal device to display the specific event.

In the server device according to the present technology described above, the event data management unit may store and manage update of the event data that contains selection information or editing information corresponding to the image data, in response to reception of information associated with the specific event from the terminal device.

In a case where such editing information as retouch parameters for images of a certain event or the selection information indicating such information as selection as a candidate of an image collection is received from the terminal device, the event data is stored or updated in response to this reception.

In the server device according to the present technology described above, it is possible to further include an image collection creation unit that creates image collection data associated with the specific event, by using the selection information and the editing information.

Specifically, creation of the image collection is performed on the server device side.

In the server device according to the present technology described above, the selection information may contain use image information indicating selection as an image to be included in the image collection.

Specifically, the use image information indicating use as an image to be included in the image collection is stored in the event data in association with the image also on the server device side.

In the server device according to the present technology described above, the selection information may contain cover image information indicating selection as a cover image of the image collection.

Specifically, information indicating an image designated as the cover of the image collection is stored in the event data in association with a particular image also on the server device side.

In the server device according to the present technology described above, the selection information may contain emphasis display image information indicating selection as an image to be emphasized in the image collection.

Specifically, information indicating a selection state of an image to be emphasized more than other images in the image collection, such as an image in a larger size, is stored in the event data in association with the image also on the server device side.

In the server device according to the present technology described above, a data output unit that transmits image data contained in the event data to the terminal device, as a file in a predetermined format, may further be provided.

For example, the server device is allowed to download various types of data, such as metadata and image data, contained in the event data, in response to a request from the terminal device.

An information processing method according to the present technology is directed to an information processing method performed by a terminal device. This method includes an event data management process that performs a process for storing image data received via communication with an imaging device and additional information containing at least rating information corresponding to the image data, both as event data associated with a specific event, and an update process for updating the event data according to an operation input, a user interface control process that controls presentation of images and the rating information associated with the event data of the specific event, and detects the operation input, and a communication control process that controls communication for synchronizing the event data of the terminal device with event data of a server device disposed outside, according to storage or update of the event data of the terminal device.

These processes are assistance processes for improving efficiency of work performed by a photographer or the like to create an image collection.

A program according to the present technology is directed to a program that causes a terminal device to execute processes corresponding to the above information processing method.

### [Brief Description of Drawings]

[FIG. 1]

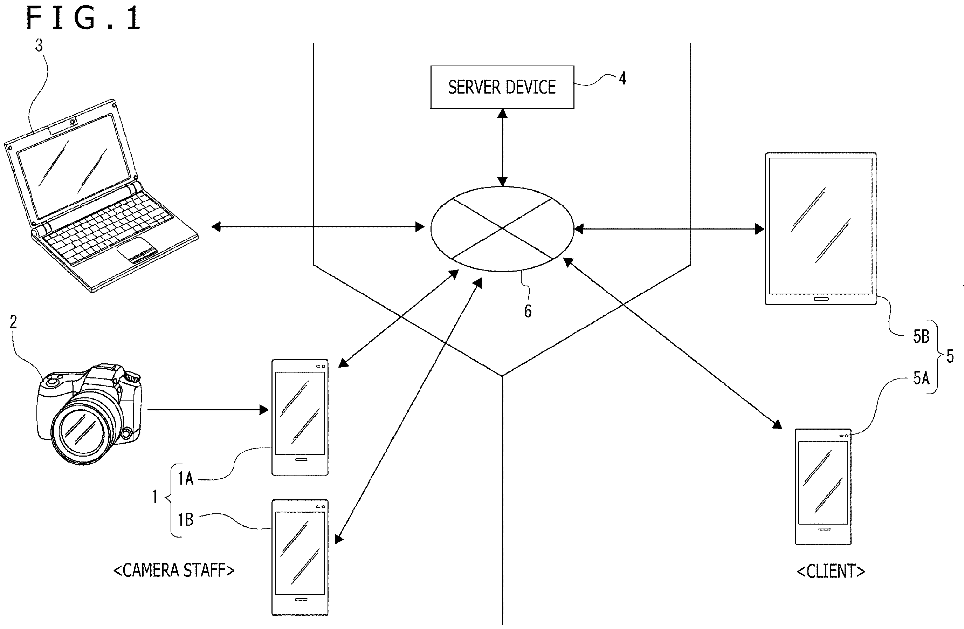

   FIG. 1 is an explanatory diagram of a system configuration for providing a service of an embodiment according to the present technology.
[FIG. 2]

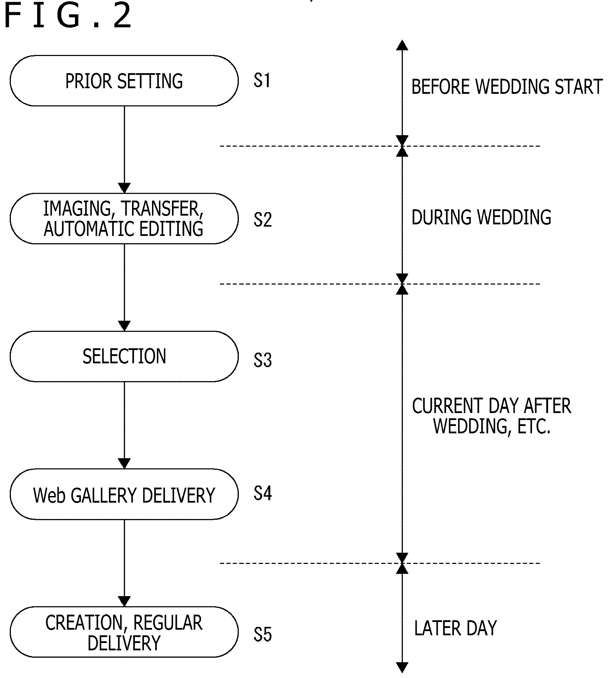

   FIG. 2 is an explanatory diagram of a work procedure for providing the service of the embodiment.
[FIG. 3]

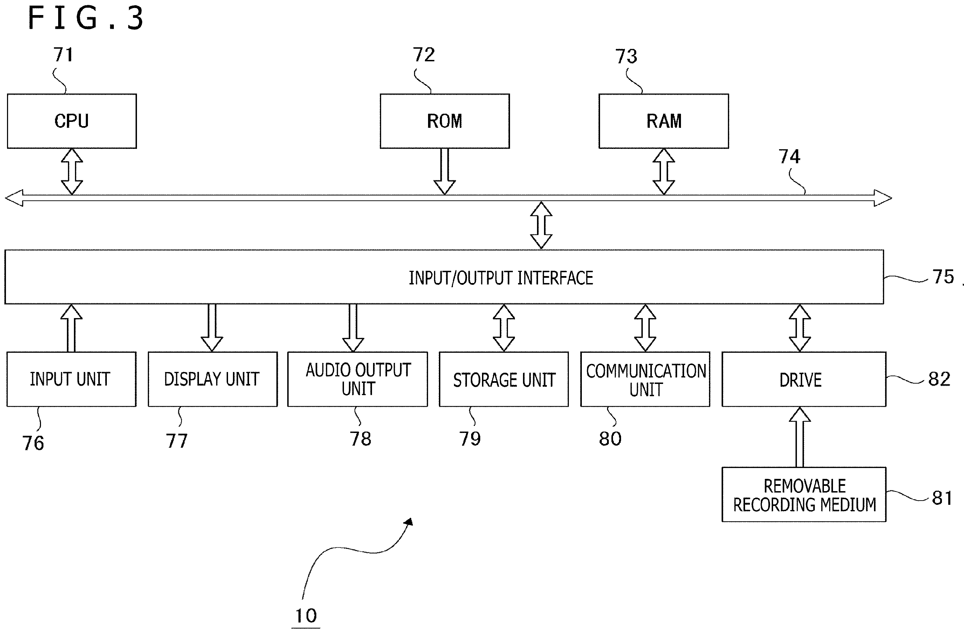

   FIG. 3 is a block diagram of a configuration of each of a terminal device and a server device of the embodiment.
[FIG. 4]

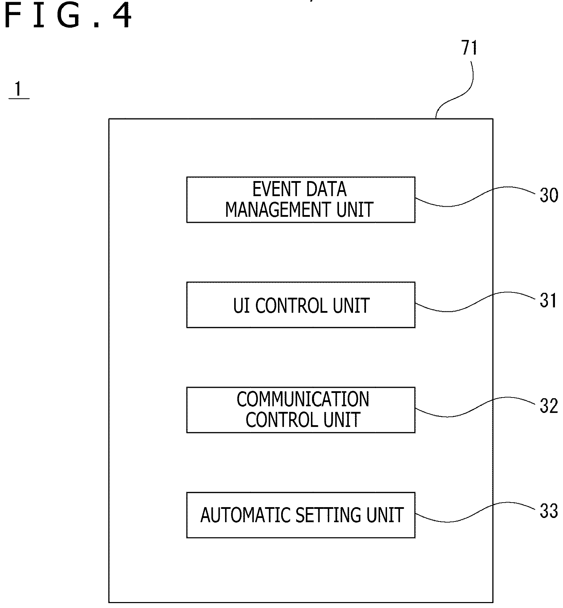

   FIG. 4 is an explanatory diagram of a functional configuration of the terminal device of the embodiment.
[FIG. 5]

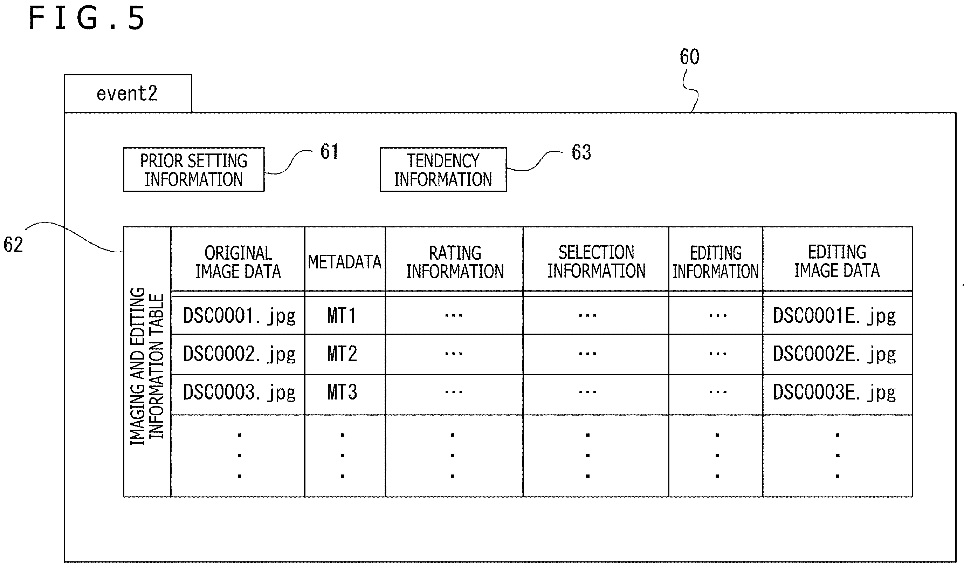

   FIG. 5 is an explanatory diagram of event data on the terminal device side of the embodiment.
[FIG. 6]

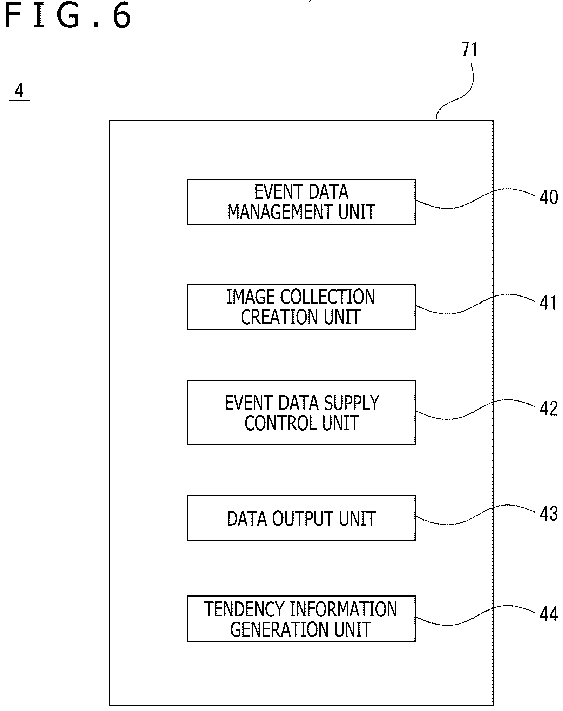

   FIG. 6 is an explanatory diagram of a functional configuration of the server device of the embodiment.
[FIG. 7]

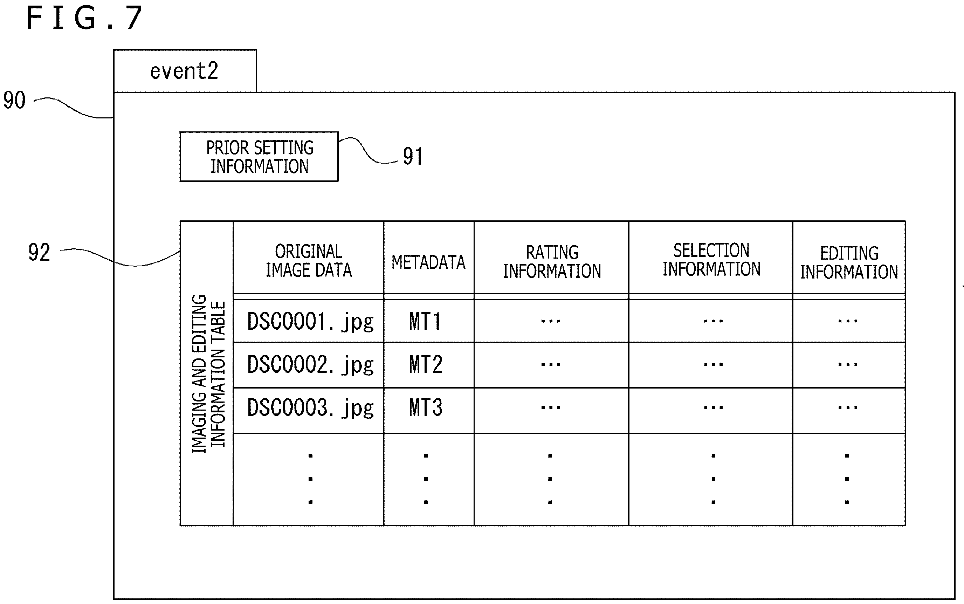

   FIG. 7 is an explanatory diagram of event data on the server device side of the embodiment.
[FIG. 8]

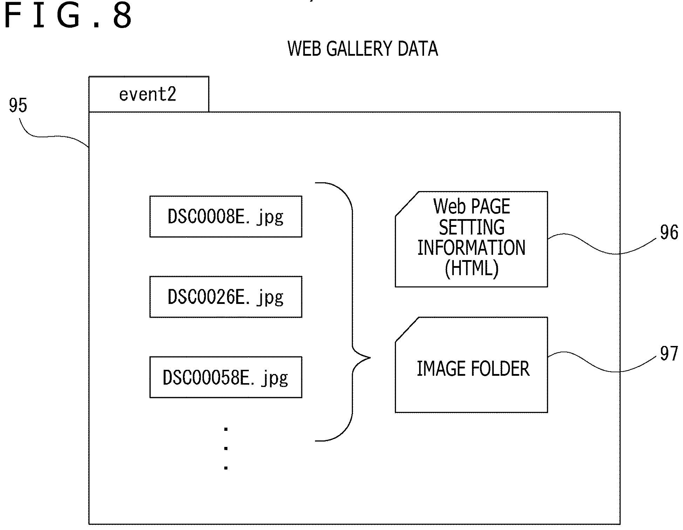

   FIG. 8 is an explanatory diagram of web gallery information generated by the server device of the embodiment.
[FIG. 9]

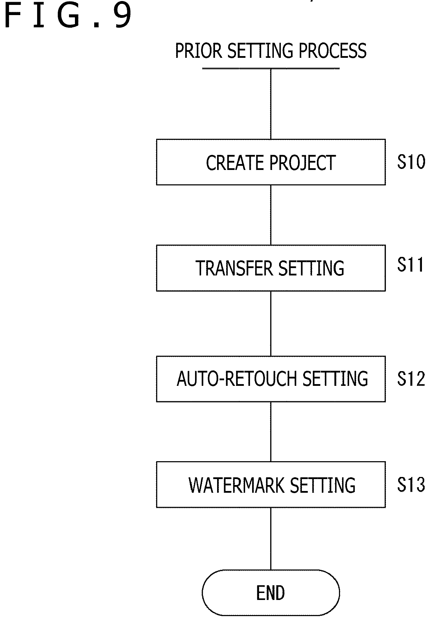

   FIG. 9 is a flowchart of a prior setting process performed by the terminal device of the embodiment.
[FIG. 10]

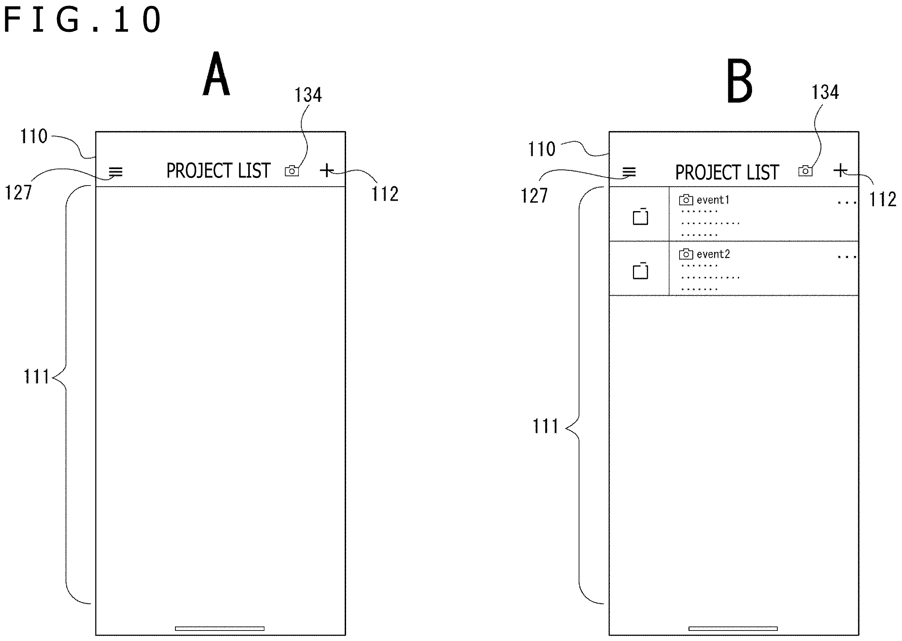

   FIG. 10 depicts explanatory diagrams of a project list screen of the embodiment.
[FIG. 11]

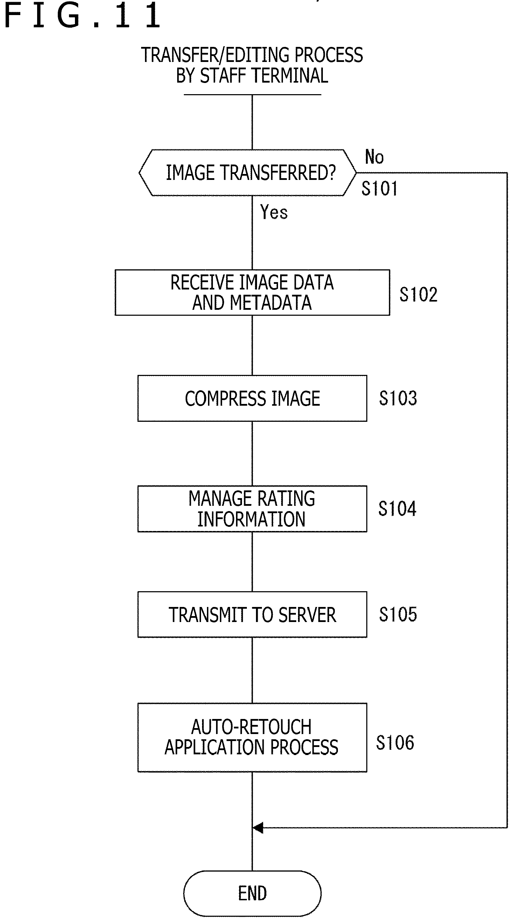

   FIG. 11 is a flowchart of a transfer/editing process performed by the terminal device of the embodiment.
[FIG. 12]

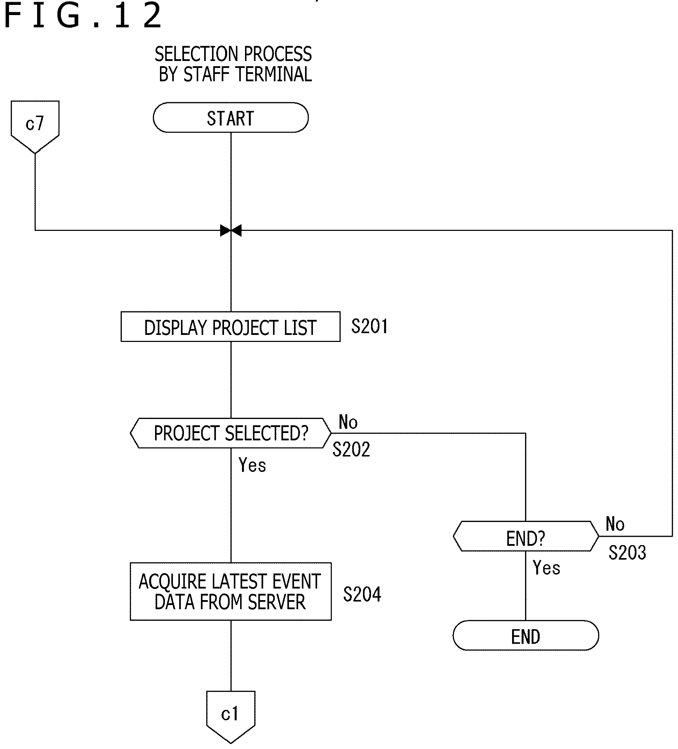

   FIG. 12 is a flowchart of a selection assistance process performed by the terminal device of the embodiment.
[FIG. 13]

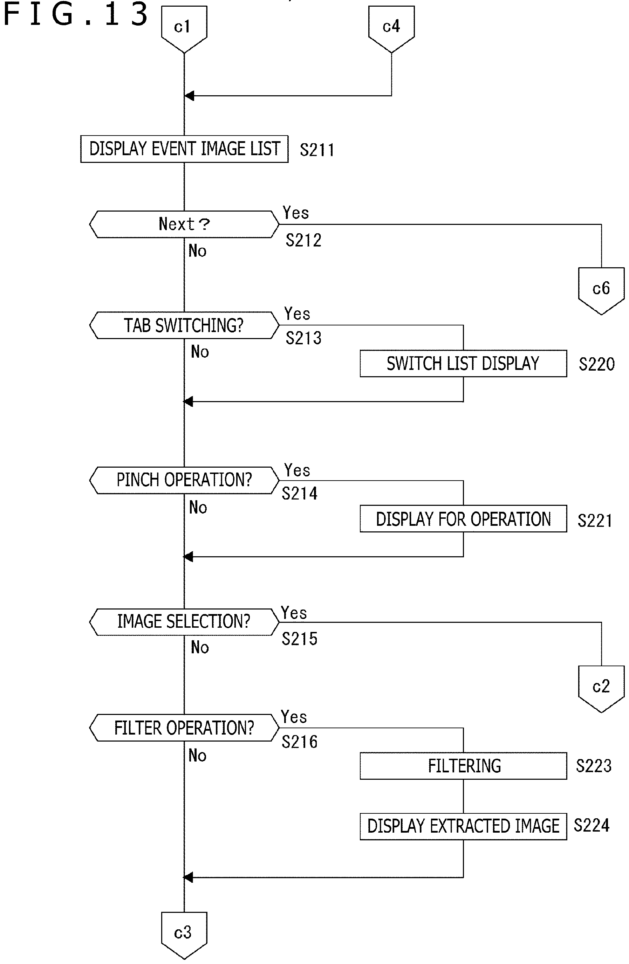

   FIG. 13 is a flowchart of the selection assistance process performed by the terminal device of the embodiment.
[FIG. 14]

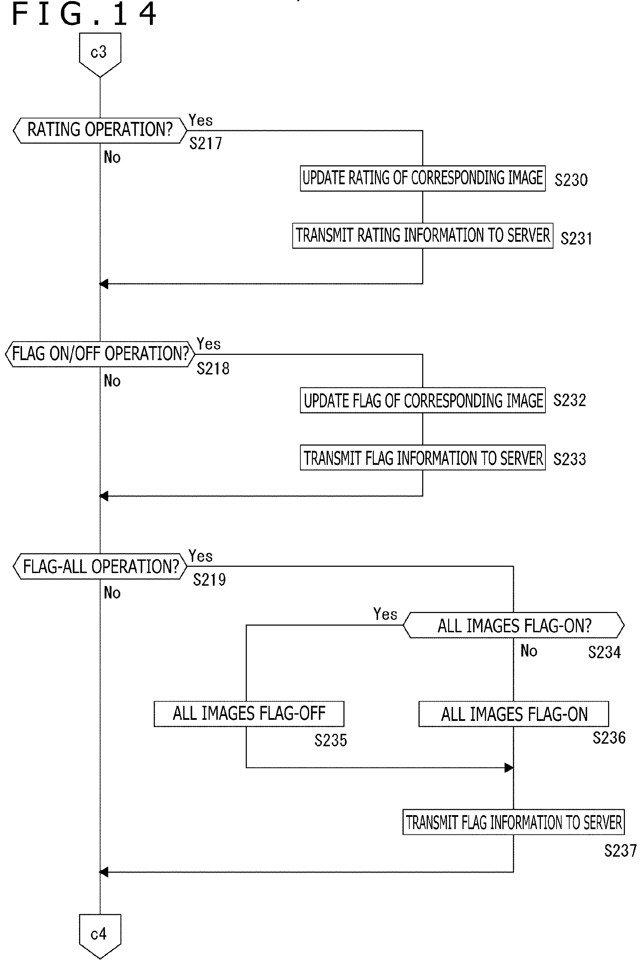

   FIG. 14 is a flowchart of the selection assistance process performed by the terminal device of the embodiment.
[FIG. 15]

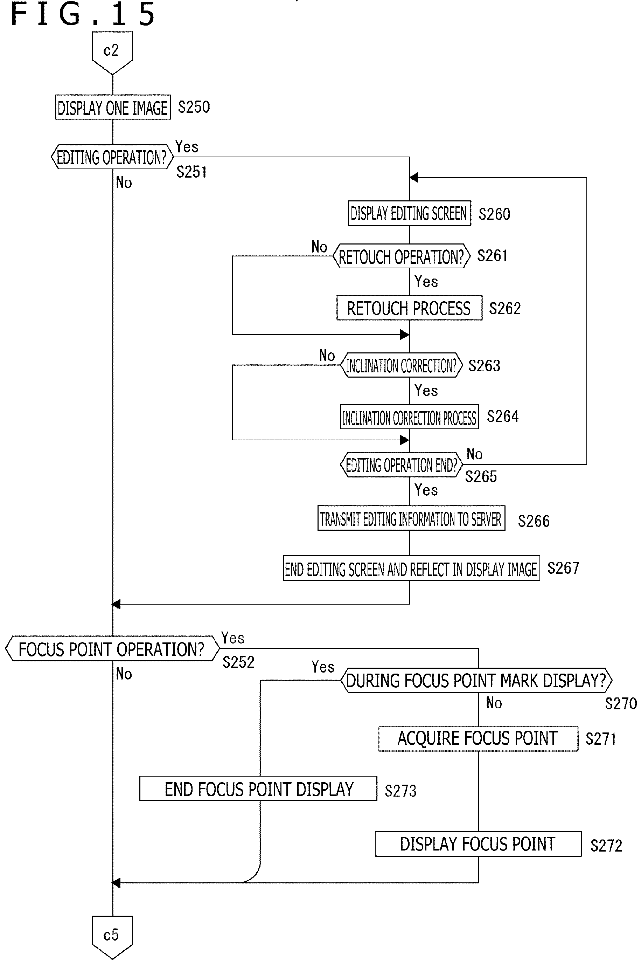

   FIG. 15 is a flowchart of the selection assistance process performed by the terminal device of the embodiment.
[FIG. 16]

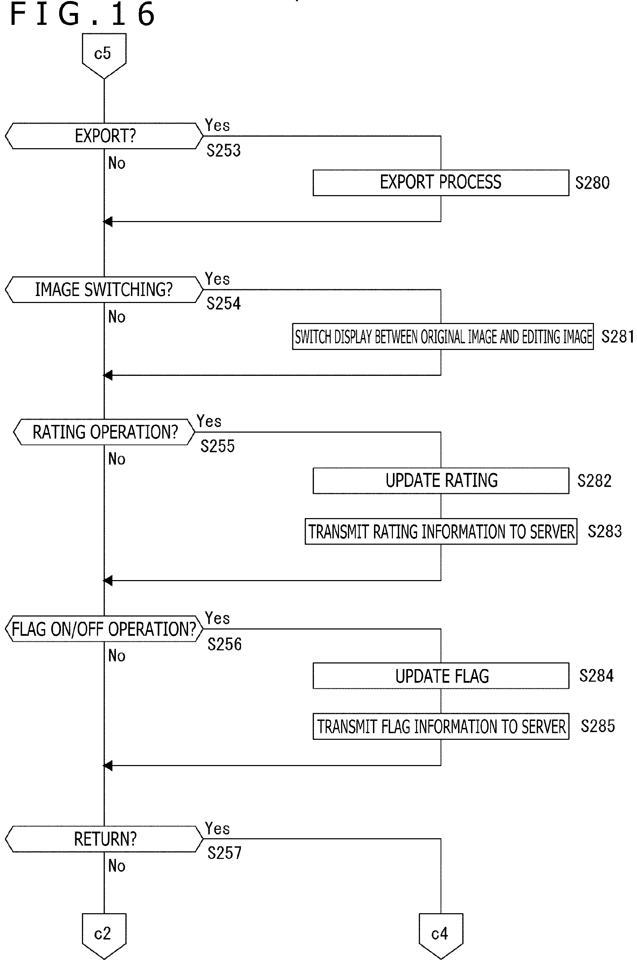

   FIG. 16 is a flowchart of the selection assistance process performed by the terminal device of the embodiment.
[FIG. 17]

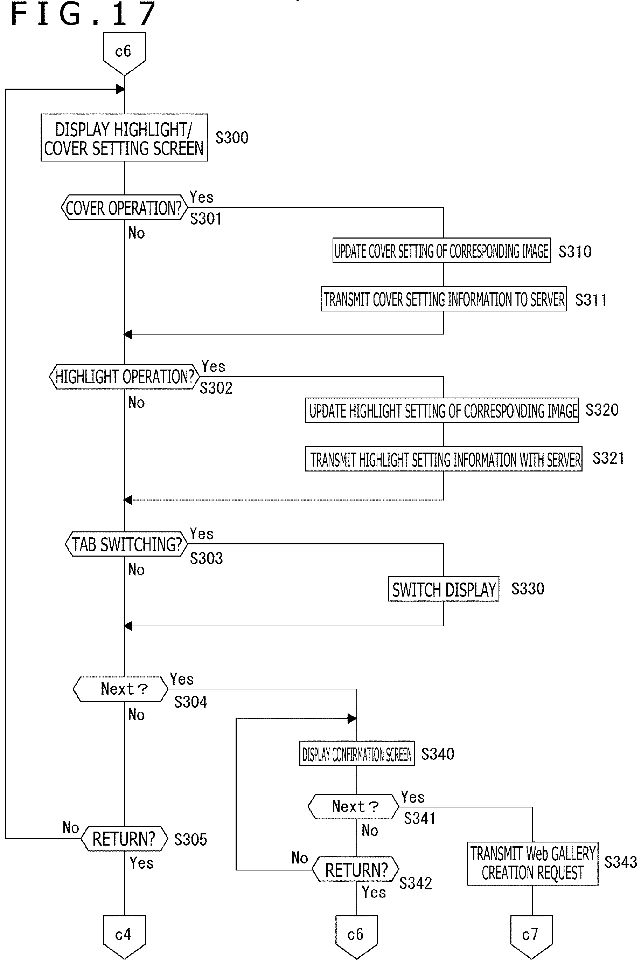

   FIG. 17 is a flowchart of the selection assistance process performed by the terminal device of the embodiment.
[FIG. 18]

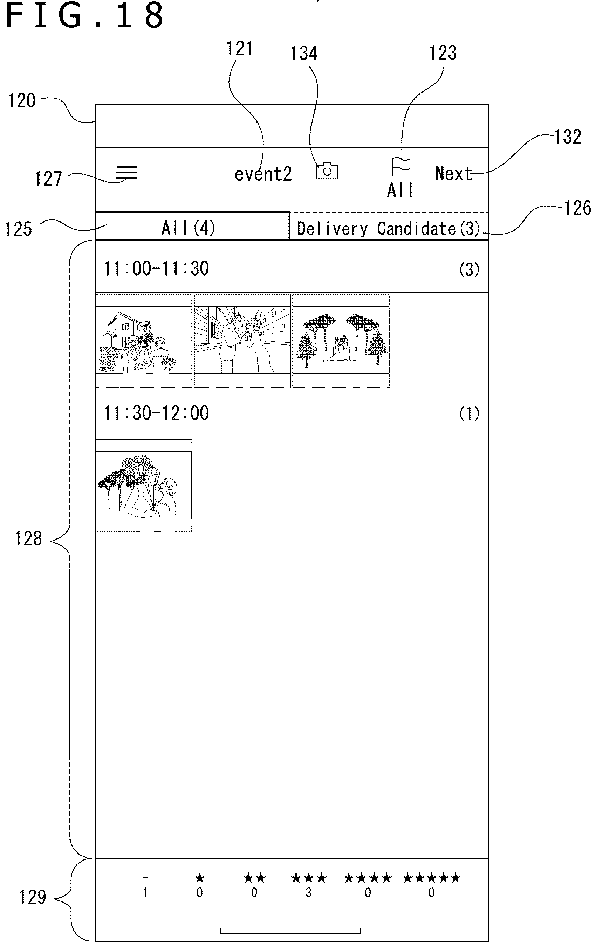

   FIG. 18 is an explanatory diagram of an event screen of the embodiment.
[FIG. 19]

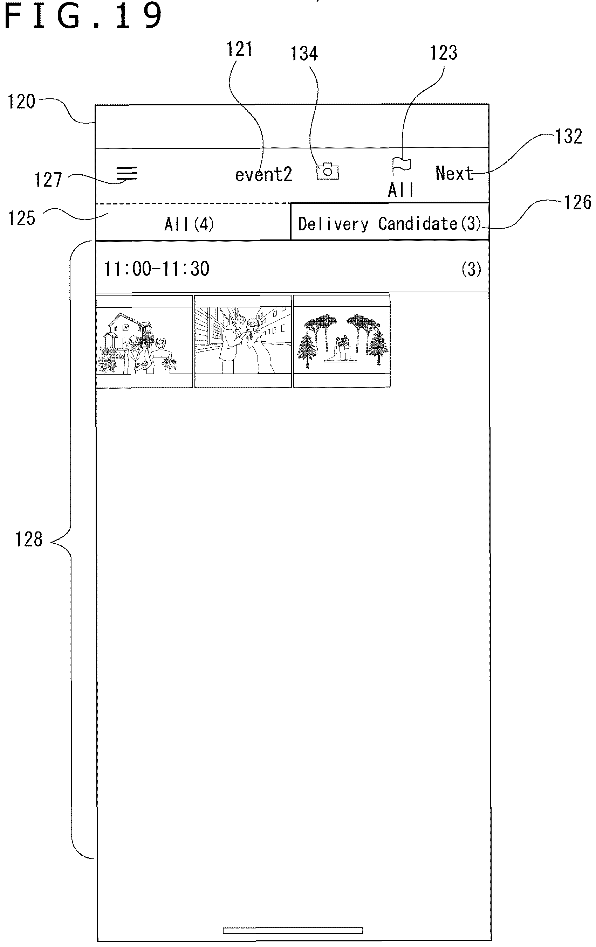

   FIG. 19 is an explanatory diagram of tab transition of the event screen of the embodiment.
[FIG. 20]

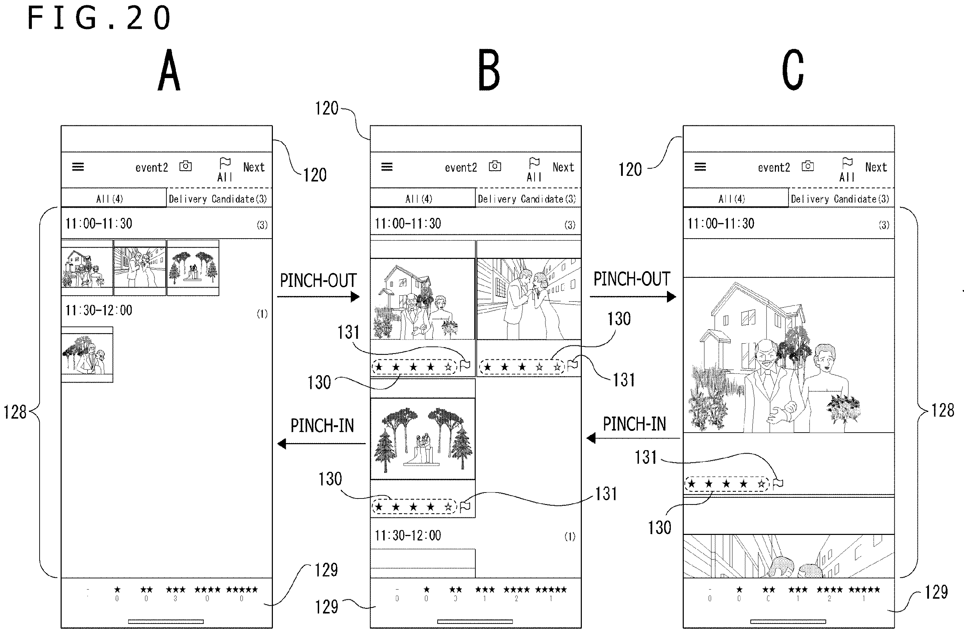

   FIG. 20 depicts explanatory diagrams of a pinch operation of the event screen of the embodiment.
[FIG. 21]

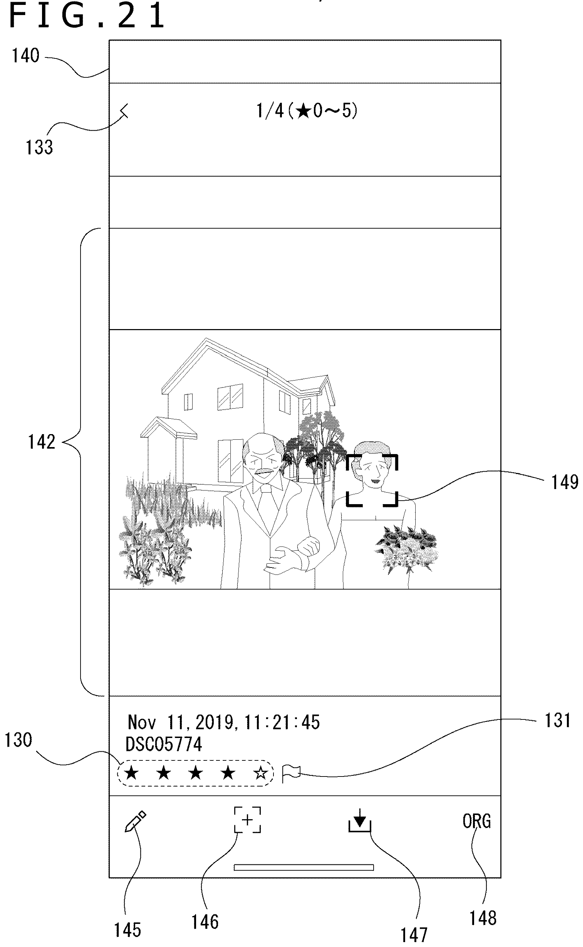

   FIG. 21 is an explanatory diagram of one display screen of the embodiment.
[FIG. 22]

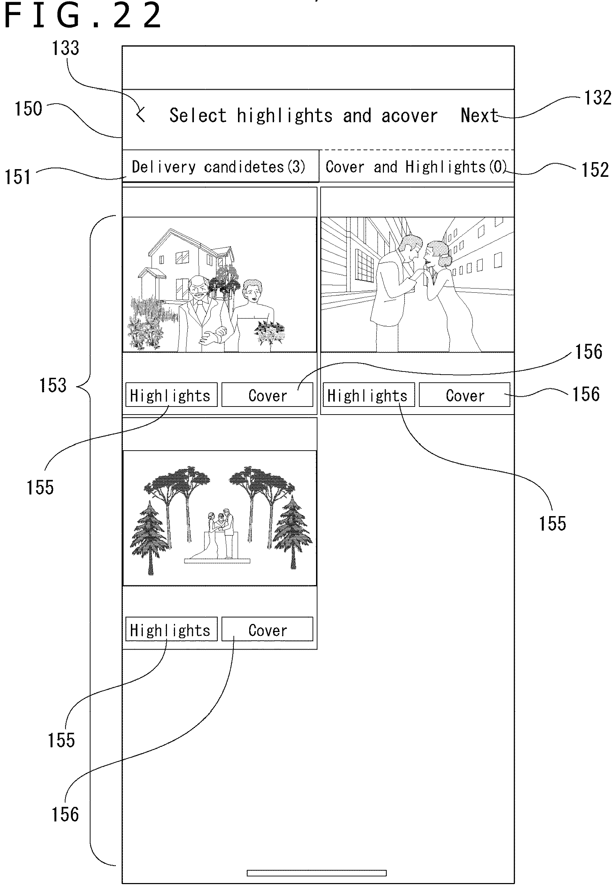

   FIG. 22 is an explanatory diagram of a coverhighlight selection screen of the embodiment.
[FIG. 23]

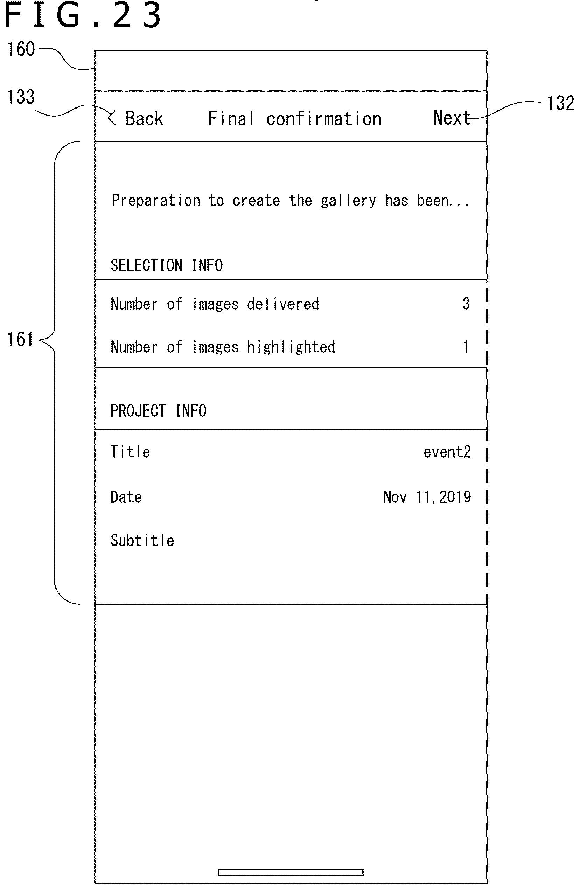

   FIG. 23 is an explanatory diagram of a confirmation screen of the embodiment.
[FIG. 24]

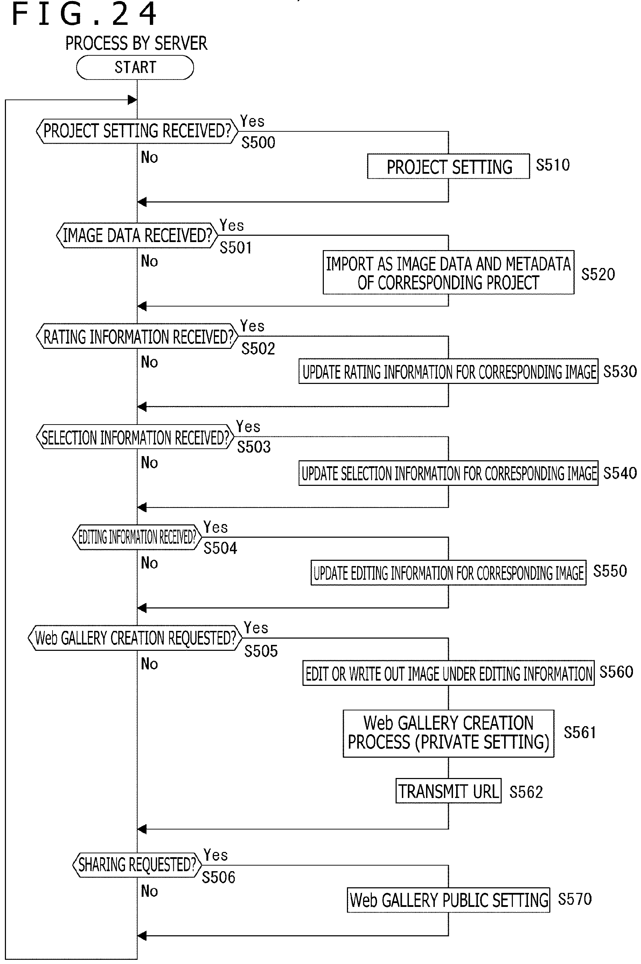

   FIG. 24 is a flowchart of a process performed by the server device of the embodiment.
[FIG. 25]

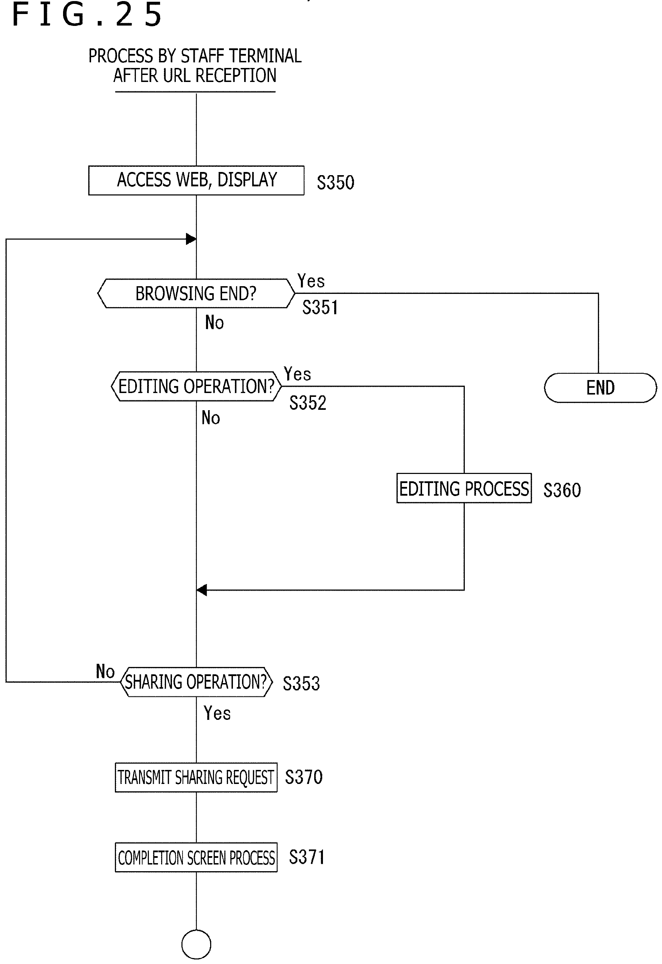

   FIG. 25 is a flowchart of a process performed after URL reception by the terminal device of the embodiment.
[FIG. 26]

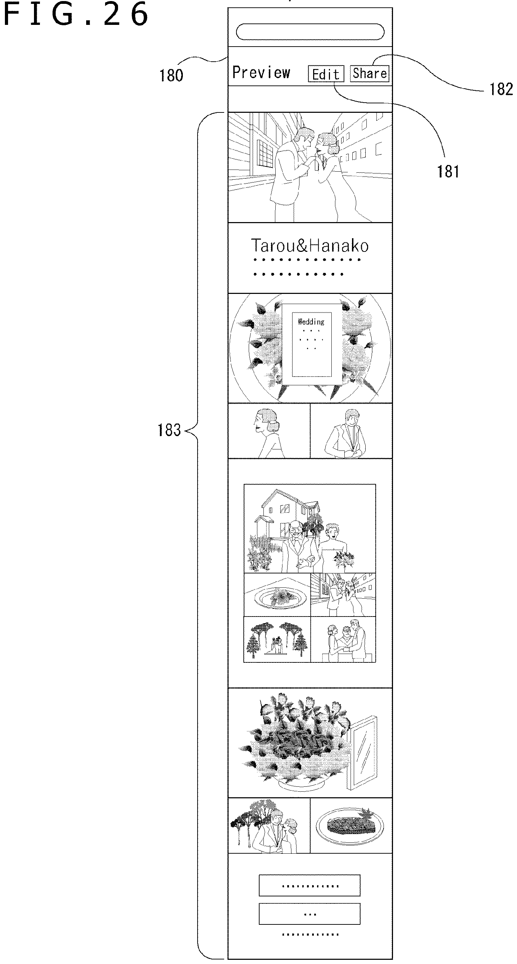

   FIG. 26 is an explanatory diagram of a preview screen of a web gallery of the embodiment.
[FIG. 27]

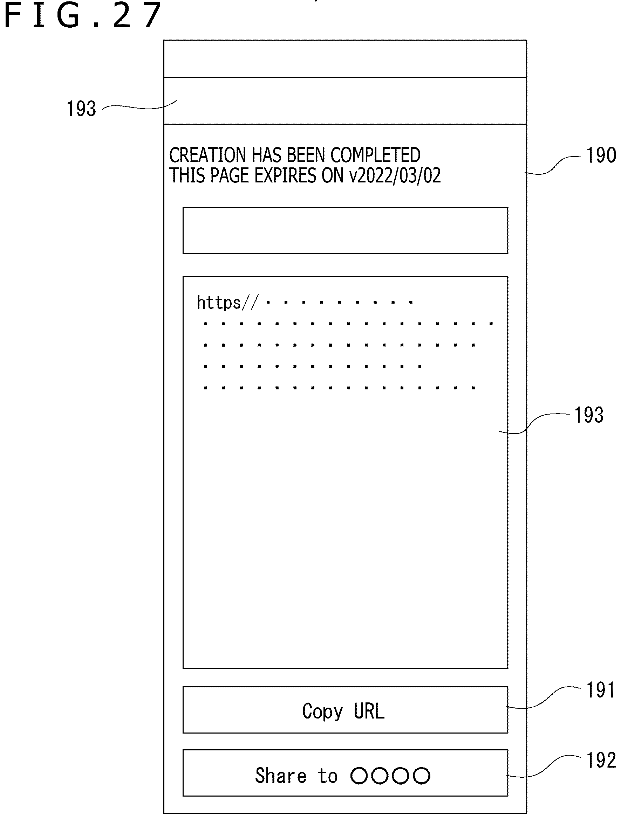

   FIG. 27 is an explanatory diagram of a web gallery delivery screen of the embodiment.
[FIG. 28]

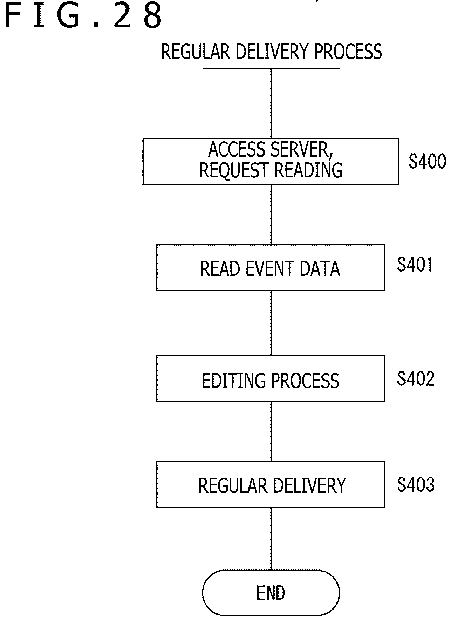

   FIG. 28 is a flowchart of a regular delivery process performed by the terminal device of the embodiment.
[FIG. 29]

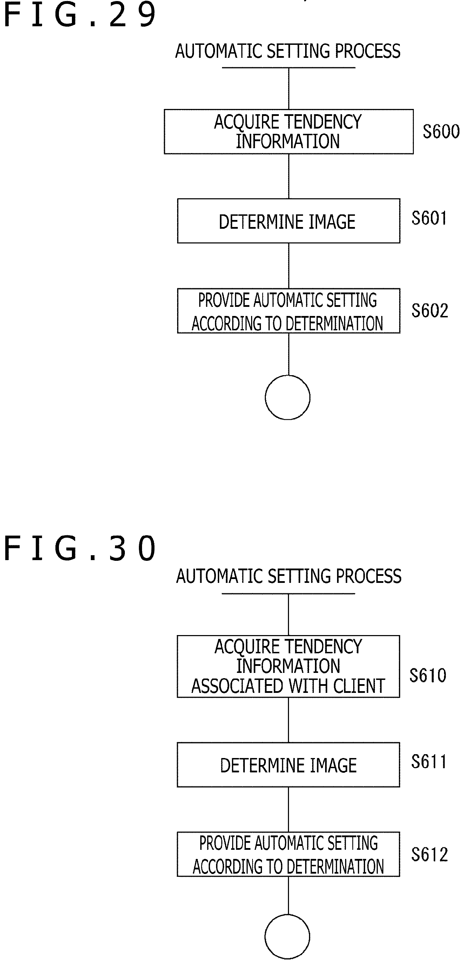

   FIG. 29 is a flowchart of an automatic setting process performed by the terminal device of the embodiment.
[FIG. 30]
   FIG. 30 is a flowchart of the automatic setting process performed by the terminal device of the embodiment.
[FIG. 31]

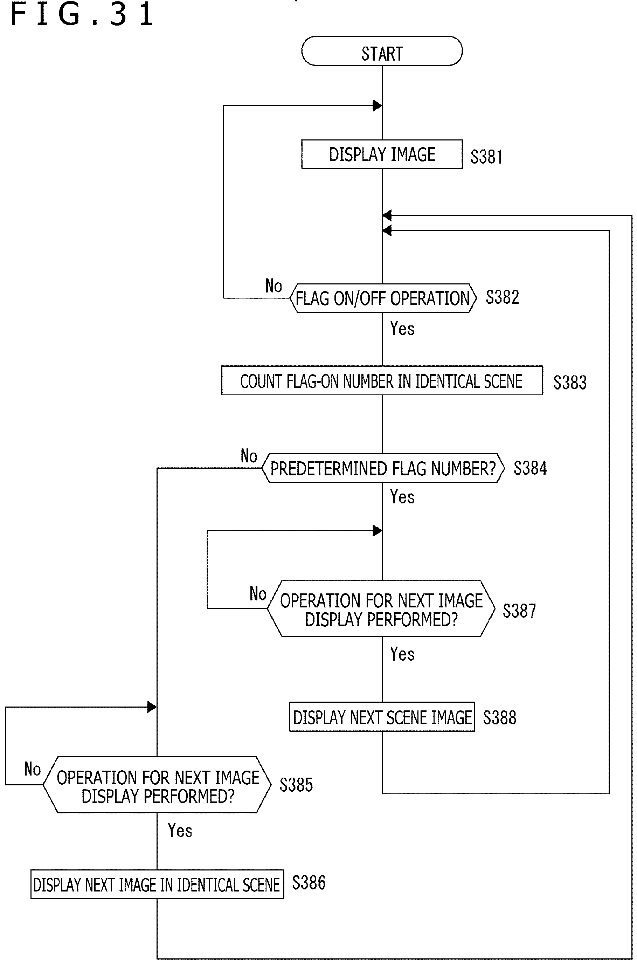

   FIG. 31 is a flowchart of a display control process example according to a flag-on number of the embodiment.
[FIG. 32]

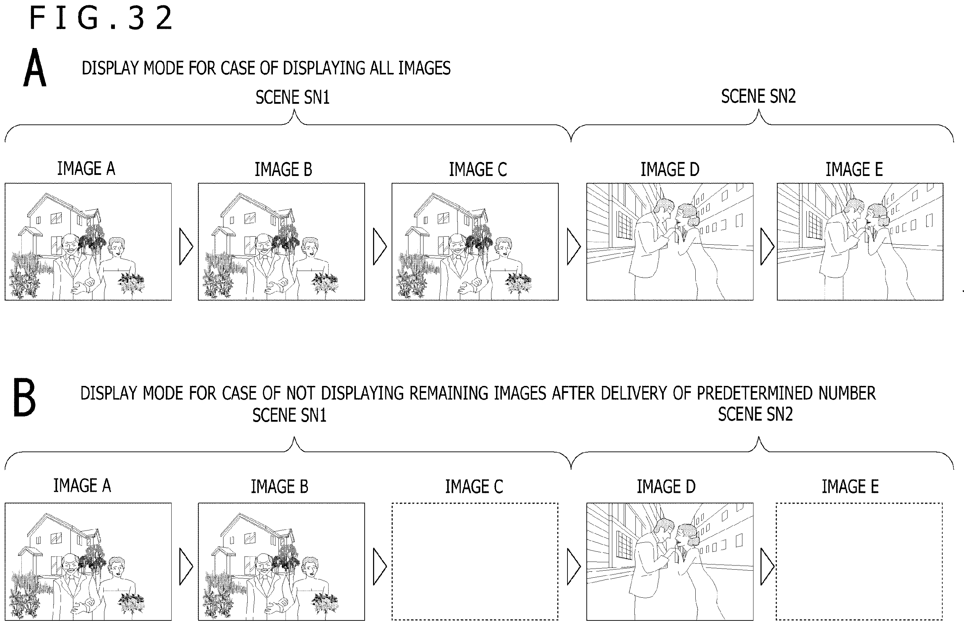

   FIG. 32 depicts explanatory diagrams of the display control process example according to the flag-on number of the embodiment.
[FIG. 33]

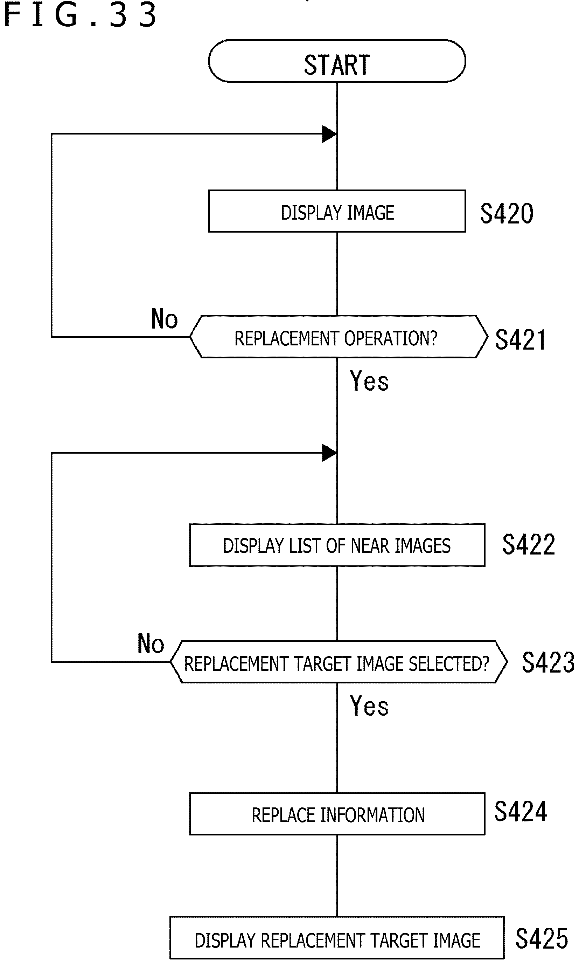

   FIG. 33 is a flowchart of an information replacement process example of the embodiment.
[FIG. 34]

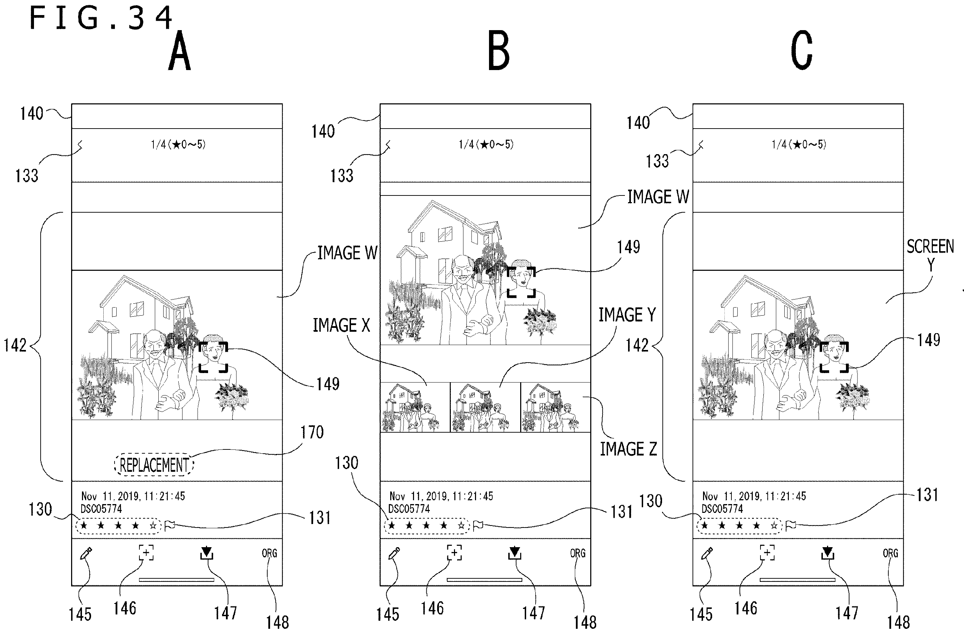

   FIG. 34 depicts explanatory diagrams of a display example concerning information replacement of the embodiment.
[FIG. 35]

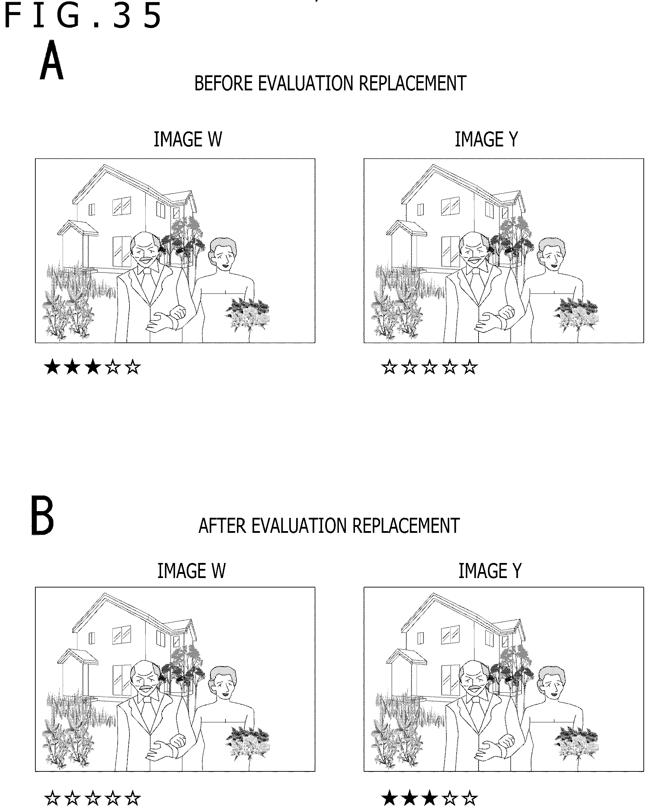

   FIG. 35 depicts explanatory diagrams of replacement of rating information of the embodiment.
[FIG. 36]

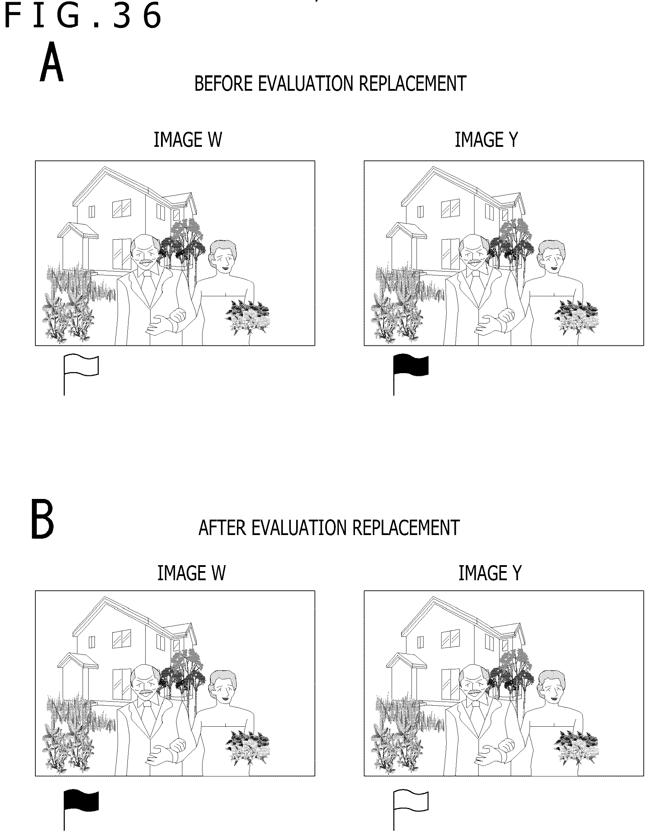

   FIG. 36 depicts explanatory diagrams of replacement of selection information of the embodiment.

### [Description of Embodiment]

An embodiment will hereinafter be described in the following order.
<1. System configuration and work procedure for image collection providing service>
<2. Configuration of terminal device and server device>
<3. Prior setting process>
<4. Transfer/editing process>
<5. Selection process>
<6. Server process>
<7. Web gallery delivery process>
<8. Regular delivery process>
<9. Automatic setting process>
<10. Summary and modifications>

### <1. System configuration and work procedure for image collection providing service>

The embodiment will be described on an assumption of a case of creating content as an image collection including captured images which are still images (pictures) taken by a photographer in such an event as a wedding, and providing the created content to a client for a charge or no charge.

Note that an image collection containing videos captured with sound or videos captured without sound may be created instead of the image collection of still images. Alternatively, an image collection including multiple videos may be created.

A photographer and an assistant of the photographer will collectively be referred to as a camera staff for convenience of explanation.

Moreover, a client is a general term of not only a purchaser but also a user allowed to receive supply of an image collection and view the image collection. For example, persons concerned such as a bridal pair and relatives and friends of the bridal pair will collectively be referred to as a client.

The image collection refers to a wide range of content constituted by a collection of images (still images and videos), such as a picture album, and may be provided in any providing mode. According to the present embodiment presented by way of example, it is assumed that an image collection for a web gallery and an image collection for regular delivery are providable.

For example, the image collection for the web gallery here is an electronic image collection containing event pictures which are made browsable on a web site promptly after the end of such an event as a wedding.

Note that described here is an example which uses a web site. However, this case is presented only by way of example. Adoptable is such a providing mode capable of transmitting a content file constituting an image collection to the terminal device of the client, by using an e-mail, an electronic message, social media, or the like, for example.

Moreover, the image collection for regular delivery refers to an event image collection officially created by the camera staff as a picture album, and provided to the client later, for example. The image collection for regular delivery may be an electronic image collection including image album content, slideshow content, or the like created by editing image data of images captured during an event, or may be an image collection created using a paper medium, for example. The electronic image collection may be provided by downloading, streaming, or by other methods, or may be stored in a portable storage medium such as a disk-shaped storage medium, a cardshaped storage medium, a tape-shaped storage medium, and a flash memory medium, and provided in this form.

According to the present embodiment, an image collection which the client can promptly browse is created as the image collection for the web gallery prior to creation of the image collection for regular delivery. Moreover, the image collection for the web gallery is not a collection simply containing a large volume of captured images arranged in a simple manner, but a collection containing selected images and having quality sufficient for offering pleasure to viewers.

On the other hand, the image collection for regular delivery is considered as a collection created by the camera staff with investment of time and editing with more sophisticated creativity.

FIG. 1 depicts terminal devices 1A and 1B, an imaging device 2, a personal computer 3, a server device 4, terminal devices 5A and 5B, and a network 6.

Note that the terminal devices 1A and 1B indicate terminal devices used by the camera staff, and will collectively be referred to as a staff terminal 1 for the purpose of distinction for the explanation.

The terminal devices 5A and 5B are terminal devices each used by a user corresponding to the client described above, and will collectively be referred to as a client terminal 5 for convenience of the explanation.

Each of the staff terminal 1 and the client terminal 5 here is a portable terminal device, such as a smartphone and a tablet device, presented by way of example.

For example, the terminal device 1A is a smartphone assumed to be used by the photographer, while the terminal device 1B is a smartphone assumed to be used by the assistant.

Meanwhile, the terminal device 5A is a smartphone assumed to be used by a bride, while the terminal device 5B is a tablet device assumed to be used by a friend present at the event site.

Each of the staff terminal 1 and the client terminal 5 is only required to be what is generally called an information processing device. Specific examples of these terminals are assumed to include a personal computer device, a cellular phone device, a game console, an audio device, a video device, a communication device, a television device, and other various types. In other words, each of the staff terminal 1 and the client terminal 5 of the present disclosure may be any information processing device capable of performing information processing operation, such as a device including a built-in micro-computer.

However, it is preferable that each of the terminals be a portable terminal, such as a smartphone and a tablet device, on an assumption of use at the event site or like places.

It is assumed that the imaging device 2 is any of various types of imaging devices functioning as a video camera or a still camera. It is assumed that the imaging device 2 depicted in the figure is a camera used by the photographer at the site of the wedding.

The imaging device 2 and the staff terminal 1 (e.g., terminal device 1A) are assumed to communicate with each other by data communication. This data communication is achieved using FTP (File Transfer Protocol) communication, for example.

Specifically, the terminal device 1A may function as an FTP server to sequentially or collectively upload an image file (containing image data and metadata) of images captured by the imaging device 2, by FTP communication.

Accordingly, it is assumed that the imaging device 2 has FTP setting for data transfer to the terminal device 1A.

Contents of FTP setting information include a host name of an FTP server, a storage destination path, a user name, a password, a connection type, and the like.

However, each of the imaging device 2 and the terminal device 1A is not necessarily required to use FTP, and may adopt other protocols.

Moreover, any communication system may be applied to transfer images and metadata between the imaging device 2 and the terminal device 1A. For example, information communication may mutually be achieved by short-range wireless communication such as Bluetooth (registered trademark), WI-FI (Wireless Fidelity: registered trademark), and NFC (Near Field Communication: registered trademark), infrared communication, or the like.

Furthermore, communication between the imaging device 2 and the terminal device 1A may mutually be achieved by wired connection communication such as a wired LAN.

The personal computer 3 is an example of an information processing device used by the camera staff for creating image collection content for regular delivery, for example.

The personal computer 3 is employed to carry out work of acquiring data associated with event images from the server device 4 and creating image collection content for regular delivery from the acquired data by using an image editing application or the like.

The server device 4 provides and manages various types of information to be used by the camera staff for creating the image collection for the web gallery or for regular delivery.

For example, the staff terminal 1 has an application program installed to provide an image collection providing service, and performs processes described below under this application program. The server device 4 manages data associated with the event and creates a web gallery, for example, in correspondence with the processes performed by the staff terminal 1.

The staff terminal 1 and the server device 4 are always connected to each other during operation of the application program described above, for example, to achieve synchronization of the event data. As described below, examples of the event data include image data of images captured during the event, data used for creating the web gallery, and others.

The "synchronization" in the present disclosure refers to a state where at least a part of data contents of event data stored in the staff terminal 1 and event data stored in the server device 4 are kept equivalent to each other. Particularly, data to be synchronized is image data, rating information, selection information, editing information, or the like, for example. Respective contents of these kinds of data will be described later.

For example, the network 6 is assumed to be the Internet, a home network, a LAN (Local Area Network), a satellite communication network, or other various types of networks.

The staff terminal 1 is capable of uploading image data and the like to the server device 4 via the network 6, and transmitting information for synchronization.

The client terminal 5 is capable of accessing a web page provided by the server device 4 via the network 6, and browsing a web gallery.

The personal computer 3 is capable of acquiring an image file for creating image collection content for regular delivery from the server device 4 via the network 6.

Described with reference to FIG. 2 will be a schematic procedure achieved by the system thus configured to provide an image collection. This is a work procedure performed by the staff terminal 1 according to operations performed by the camera staff corresponding to a service provider.

In step S1, prior setting is provided. For example, the camera staff provides communication setting between the staff terminal 1 and the imaging device 2, event setting, image retouch setting, and other setting. This prior setting is completed before the start of the wedding.

In step S2, imaging, transfer, and automatic editing during the wedding are performed.

An image file of images captured by the photographer with use of the imaging device 2 is sequentially transferred to the staff terminal 1 (e.g., terminal device 1A).

The staff terminal 1 imports the image file, and also performs transfer of the image file and the like to the server device 4, automatic editing of images according to prior setting, and others, for example.

Work presented in step S3 is work allowed to be performed on the current day after the end of the wedding, for example.

The camera staff performs a selection operation by using the staff terminal 1. This selection includes selection of images posted on the web gallery, selection of a cover image and a highlight image, editing of images, and the like. The staff terminal 1 performs an update process and the like of the event data according to operations performed by the camera staff. A process for synchronization with the event data on the server device 4 side is also sequentially performed.

In step S4, a process for delivery of the web gallery is performed. The web gallery is created by the server device 4 in reference to the event data. An operation for allowing the client to browse the web gallery is performed after completion of checking of contents of the web gallery by the camera staff with use of the staff terminal 1. This allows the client to browse the web gallery constituting an image collection of the wedding on the current day after the end of the wedding, for example.

A process presented in step S5 is a process for creating an image collection for regular delivery and for achieving regular delivery.

The camera staff creates image collection content for regular delivery at a later date, by using the personal computer 3, for example, and provides the created content to the client.

This allows the client to receive the image collection content for regular delivery.

### <2. Configuration of information processing device>

FIG. 3 depicts a configuration example of an information processing device 10 capable of constituting the staff terminal 1, the client terminal 5, the server device 4, or the personal computer 3. The staff terminal 1, the personal computer 3, or the server device 4 includes the following configuration of the information processing device 10 to execute processes described later.

The CPU (Central Processing Unit) 71 of the information processing device 10 executes various types of processes under a program stored in a ROM (Read Only Memory) 72, or a program loaded from the storage unit 79 to a RAM (Random Access Memory) 73. The RAM 73 also appropriately stores data and the like necessary for the CPU 71 to execute the various types of processes.

The CPU 71, the ROM 72, and the RAM 73 are connected to one another via a bus 74. An input/output interface 75 is also connected to the bus 74.

An input unit 76 including an operator or an operation device is connected to the input/output interface 75.

For example, the input unit 76 is assumed to be any of various types of operators and operation devices such as a keyboard, a mouse, keys, a dial, a touch panel, a touch pad, and a remote controller.

An operation performed by the user is detected by the input unit 76. A signal corresponding to the input operation is interpreted by the CPU 71.

Moreover, a display unit 77 including a liquid crystal panel (LCD: Liquid Crystal Display), an organic EL (Electro-Luminescence) display, or the like and an audio output unit 78 including a speaker or the like are connected to the input/output interface 75, as integrated or separated components.

The display unit 77 is a display unit presenting various types of display, and includes a display device provided on a housing of the information processing device 10, a separate display device connected to the information processing device 10, or the like, for example.

The display unit 77 executes display of images used for various types of image processing, videos to be processed, and the like in a display screen in accordance with instructions from the CPU 71. Moreover, the display unit 77 displays various types of operation menus, icons, messages, or the like, i.e., items as GUI (Graphical User Interface), in response to instructions from the CPU 71.

A storage unit 79 including a hard disk, a solidstate memory, or the like and a communication unit 80 providing communication using various types of communication systems are connected to the input/output interface 75 depending on circumstances.

The communication unit 80 provides communication achieved by a communication process via such a transmission path as the Internet, by wired/wireless communication with various types of devices, by bus communication, or by other methods.

Assuming that the information processing device 10 constitutes the staff terminal 1, the communication unit 80 has a function of performing FTP communication with the imaging device 2 and a function of communicating with the server device 4 via the network 6. Alternatively, the communication unit 80 may have a function of providing communication achieved by short-range wireless communication such as Bluetooth, WI-FI, and NFC, infrared communication, wired connection communication, or the like described above. Moreover, the communication unit 80 may have a function of providing communication using a communication line for cellular phones, such as LTE (Long Term Evolution).

Assuming that the information processing device 10 thus configured constitutes the server device 4 or the personal computer 3, the communication unit 80 has at least the function of providing communication via the network 6.

A drive 82 is further connected to the input/output interface 75 as necessary. A removable recording medium 81 such as a magnetic disk, an optical disk, a magnetooptical disk, and a semiconductor memory is appropriately attached to the drive 82.

A data file such as an image file, various types of computer programs, and the like are readable from the removable recording medium 81 by the drive 82. The data file thus read is stored in the storage unit 79, or images and sounds contained in the data file are output from the display unit 77 or the audio output unit 78. Moreover, the computer programs and the like read from the removable recording medium 81 are installed in the storage unit 79 as necessary.

According to the information processing device 10 configured as above, software used for performing the processes of the present disclosure can be installed via network communication provided by the communication unit 80, or the removable recording medium 81, for example. Alternatively, this software may be stored in the ROM 72, the storage unit 79, or the like beforehand.

In a case where the information processing device 10 is assumed to constitute the staff terminal 1, the information processing device 10 has a functional configuration depicted in FIG. 4 and constructed in the CPU 71 under software (application program).

FIG. 4 depicts an event data management unit 30, a UI (user interface) control unit 31, a communication control unit 32, and an automatic setting unit 33 as functions included in the information processing device 10 constituting the staff terminal 1.

The event data management unit 30 is a processing function for storing image data received via communication with the imaging device 2 and additional information containing rating information and the like corresponding to the image data, both as event data associated with a specific event. Moreover, the event data management unit 30 also performs an update process for updating the event data according to operation input from the camera staff.

FIG. 5 schematically depicts an example of contents of the event data.

The event data is a group of data containing images and various contents of one event registered by an operation of the staff terminal 1 performed by the camera staff. FIG. 5 depicts event data 60 associated with an event to which an event name "event2" has been given.

According to this example, it is assumed that the event data 60 contains prior setting information 61, an imaging and editing information table 62, and tendency information 63.

The prior setting information 61 is information set by the camera staff as the prior setting provided in step S1 in FIG. 2. For example, the prior setting information 61 contains editing information such as retouch parameters.

The imaging and editing information table 62 is a table subjected to sequential addition and update of information according to processing performed in steps S2 and S3 in FIG. 2.

Various types of information are described in the imaging and editing information table 62 in correspondence with the image file transferred from the imaging device 2.

The image file transferred from the imaging device 2 contains image data and metadata. This image data is managed as original image data, and the added metadata is also managed.

The image data includes raw (RAW) data, data compressed in JPEG format, or the like, for example, as data in any data format. However, the image data presented here by way of example is data compressed in JPEG format, such as "DSC0001.jpg."

The metadata contains a date of imaging of the image data, camera information, a data format, a data size, angle of view information, focus point information, and other various types of information added by the imaging device 2.

The imaging and editing information table 62 stores rating information corresponding to the image data. The rating information is information indicating an evaluation value of evaluation given by the photographer or the like to each image, such as evaluation information indicating six levels expressed by the number of stars, such as "no star," "one star," "two stars," "three stars," "four stars," and "five stars." For example, it is assumed that the evaluation rises as the number of the stars increases. Needless to say, such evaluation information is presented only by way of example. Such rating information is a reference for image selection made by the camera staff. Accordingly, at the time of setting of a selection flag (setting of use image information) described below, for example, an image given a high evaluation from the rating information is also considered as an image highly likely to be adopted for the web gallery or regular delivery.

When capturing an image, the photographer can check the captured image and give the foregoing rating information to the captured image. The imaging device 2 includes a user interface through which the rating information is input. This rating information may be contained in the metadata corresponding to the image data, for example, and transferred to the staff terminal 1 together with the image data. Alternatively, the rating information may be written to XMP region of Exif within the image file.

The staff terminal 1 extracts the rating information from the metadata (or Exif data), and manages the rating information.

This rating information is allowed to be added or updated in correspondence with the image data by an operation on the staff terminal 1 side.

The imaging and editing information table 62 stores selection information corresponding to the image data.

One of items included in the selection information is use image information indicating whether or not an image is to be posted on the web gallery. This information is a "selection flag" (also simply referred to as a "flag") described later. In this case, a flag-off image is an image selected as an image that is not to be used in the web gallery, while a flag-on image is an image selected as an image that is to be used in the web gallery.

Moreover, one of the items included in the selection information is cover image information indicating selection as a cover image to be disposed at a top of the web gallery as a cover.

Further, one of the items included in the selection information is emphasis display image information indicating selection as an image for emphasized display (highlight display) in the web gallery. It is assumed that the highlight display is display in a size larger than other images. Alternatively, an ordinary image may be a monochrome image, while a highlight image may be displayed as a color image. Conversely, from a viewpoint of emphasis, an ordinary image may be expressed as a color image and a highlight image may be expressed as a monochrome image. Instead, a distinction may be made by expressing an ordinary image as a frameless image and a highlight image as a framed image, for example. Various methods are applicable to the emphasized display.

The editing information contains various types of image processing parameters, such as retouch parameters and inclination correction parameters. The retouch parameters include image quality adjustment parameters, such as a luminance adjustment value, a color adjustment value, a contrast adjustment value, and a sharpness adjustment value.

The retouch parameters may be set by prior setting, or may individually be set for respective images. Moreover, the inclination correction parameters are individually set. Considering these points, the editing information corresponding to the image data is stored in such a manner as to allow storage of parameters set for each of the individual images.

Note that the imaging and editing information table 62 may store editing information corresponding to the image data as depicted in the figure.

The editing image data is image data obtained by editing original image data in reference to editing information determined by prior setting or editing information individually set. Moreover, the editing image data not only includes image data retouched in reference to the editing information, but may also include image data subjected to an image quality change. The quality change includes a change of an image size, a change of resolution, a cutout, and a frame rate change of a video, for example.

In the figure, "E" is given to a file name of the editing image data, such as "DSC0001E.jpg," to distinguish the editing image data from the original image data. This editing image data is used for display on the user interface of the staff terminal 1, for example.

Such editing image data is not required to be generated and stored beforehand. Instead, the editing information may be applied for each display at the time of image display, for example. Accordingly, the imaging and editing information table 62 is only required to update and manage the editing information without the necessity of storing the editing image data. However, it is effective to generate and store the editing image data as needed as depicted in the figure from a viewpoint of reducing a processing load during display processing, for example.

The tendency information 63 is stored in the event data 60 in addition to the prior setting information 61 and the imaging and editing information table 62 described above depending on circumstances. The tendency information is characteristic information indicating a selection tendency of the camera staff, a tendency of preferred images of the client (e.g., bride), and the like, for example. An example applying the tendency information 63 will be described later.

The CPU 71 of the information processing device 10 constituting the staff terminal 1 executes additional storage and update of the foregoing information included in the event data 60, by using the function of the event data management unit 30 depicted in FIG. 4.

Note that the format of the event data 60 and the format of the imaging and editing information table 62 are presented only by way of example. Any format may be adopted as long as the above contents are managed at least for each event.

For example, the original image data, the metadata, the rating information, the selection information, the editing information, and the editing image data contained in the imaging and editing information table 62 are not required to collectively be stored as a table. Any format and mode may be adopted for storage as long as the metadata, the rating information, the selection information, the editing information, and the editing image data are associated with at least each one of the original image data.

The UI control unit 31 in FIG. 4 is a function which performs a process for controlling presentation of images, rating information, and the like associated with the event data 60 of a specific event, and detecting operation input. Accordingly, the UI control unit 31 is a function for performing a user interface process.

The user interface process includes presentation of various types of information, supply of an environment allowing operation input, a process for detecting an operation performed by the user, a process for detecting or estimating an intention of the user, and others.

Specifically, for example, the UI control unit 31 performs a control process for causing the display unit 77 and the audio output unit 78 to execute output to the user, such as display output and audio output, and supply an operation input environment or present information to the user.

Alternatively, for example, the UI control unit 31 performs a process for detecting an operation performed by the user.

Instead, for example, the UI control unit 31 performs both the process for supplying the operation input environment to the user and the process for detecting the operation performed by the user.

Needless to say, the UI control unit 31 may perform other user interface processes.

The communication control unit 32 is a function which controls communication with the server device 4 disposed outside, for synchronizing event data according to storage or update of the event data 60.

For example, when receiving image transfer from the imaging device 2, the communication control unit 32 controls a process for transferring image data from the communication unit 80 to the server device 4, or controls issue of a notification of update contents to the server device 4 according to update of the contents of the event data 60.

The automatic setting unit 33 is a function for providing automatic setting of the rating information, the selection information, or the editing information by using the tendency information 63 described above. This process performed by the automatic setting unit 33 will be described later together with the tendency information 63.

The foregoing functions depicted in FIG. 4 are presented only by way of example. By the configuration of the information processing device 10 including at least the event data management unit 30, the UI control unit 31, and the communication control unit 32, the information processing device 10 is allowed to perform the processes to function as the staff terminal 1 of the present embodiment.

For example, the respective functions described above are achieved under an application program installed in the information processing device 10 to create image collection content.

Next, in a case where the information processing device 10 is assumed to constitute the server device 4, the information processing device 10 has a functional configuration depicted in FIG. 6 and constructed in the CPU 71 under software (application program).

FIG. 6 depicts an event data management unit 40, an image collection creation unit 41, an event data supply control unit 42, a data output unit 43, and a tendency information generation unit 44 as functions included in the information processing device 10 constituting the server device 4.

The event data management unit 40 is a processing function which achieves storage and update management of event data in the server device 4.

FIG. 7 schematically depicts contents of event data 90 on the server device 4 side. As in FIG. 5, the event data 90 is data associated with an event to which an event name "event2" has been given.

According to this example, it is assumed that the event data 90 contains prior setting information 91 and an imaging and editing information table 92.

The prior setting information 91 is information similar to the prior setting information 61 set for the staff terminal 1. For example, the contents set by the prior setting in step S1 in FIG. 2 are similarly managed in the server device 4.

The imaging and editing information table 92 is a table which contains information indicating contents substantially similar to the contents of the imaging and editing information table 62. Specifically, original image data, metadata, rating information, selection information, and editing information are managed for each image.

Note that editing image data is not associated with the imaging and editing information table 92 for such a reason that editing images are formed at the time of creation of a web gallery. Needless to say, the server device 4 may also sequentially generate editing image data, and associate the editing image data with original image data in the imaging and editing information table 92.

The CPU 71 of the information processing device 10 constituting the server device 4 executes additional storage and update of the foregoing information contained in the event data 90, by using the function of the event data management unit 40 depicted in FIG. 6.

The image collection creation unit 41 in FIG. 6 is a function which creates image collection content corresponding to a web gallery of a specific event. Particularly, the image collection creation unit 41 generates image collection data, i.e., web page data (web gallery data 95) constituting the web gallery, with reference to selection information and editing information included in the event data 90.

FIG. 8 depicts an example of the web gallery data 95 to be generated.

For example, the server device 4 generates the web gallery data 95 containing web page setting information 96 and an image folder 97.

For example, the web page setting information 96 is page information in HTML (HyperText Markup Language) format or XML (Extensible Markup language) format.

The image folder 97 is a folder as a collection of images called from the web page setting information 96 and displayed within a page. The image folder 97 contains editing image data which indicates images adopted as the web gallery.

The event data supply control unit 42 in FIG. 6 is a function for controlling transmission for supply of the event data 90 to the staff terminal 1.

For example, in response to login of the staff terminal 1 to the server device 4 and designation of an event, all or a part of the event data 90 of this event is transmitted to the staff terminal 1. The staff terminal 1 designates the received contents as the event data 60 under management by the staff terminal 1. As a result, the assistant is allowed to perform operations by using the event data 60 on the terminal device 1B side, for example.

Needless to say, also assumable is such a case where the event data supply control unit 42 performs event data supply control for the terminal device 1A and the personal computer 3.

The data output unit 43 performs control for transmitting a part or the whole of data contained in the event data, such as metadata, rating information, selection information, editing information, and image data (e.g., original image data) to the terminal device (e.g., personal computer 3) as a file in a predetermined format.

Accordingly, the data output unit 43 is a processing function which supplies data necessary for creating image collection content for regular delivery to the camera staff side.

The tendency information generation unit 44 is a function which learns a tendency of image selection by the camera staff and a tendency of image evaluation by the user as the client, and generates characteristic information associated with these tendencies.

Processing performed by the tendency information generation unit 44 will be described later together with processing performed by the automatic setting unit 33 of the staff terminal 1.

The foregoing functions depicted in FIG. 6 are presented only by way of example. By the configuration of the information processing device 10 including the event data management unit 40, synchronization of the event data is achievable between the staff terminal 1 and the server device 4. Moreover, by the configuration of the server device 4 including the image collection creation unit 41, prompt creation of the web gallery is achievable.

For example, the respective functions depicted in FIG. 6 are achieved under an application program installed in the information processing device 10 to create image collection content.

### <3. Prior setting process>

A specific processing example will hereinafter be described.

First described with reference to FIGS. 9 and 10 will be a processing example of the prior setting performed by the staff terminal 1 and presented as step S1 in FIG. 2.

Note that the process performed by the staff terminal 1 described below refers to a process performed by the CPU 71 of the information processing device 10 having the functions depicted in FIG. 4.

Moreover, each of screen examples described below with reference to a flowchart is an example of display contents on a display formed on a housing of a smartphone, for example, on an assumption that the information processing device 10 constituting the staff terminal 1 is this smartphone.

FIG. 9 presents a process performed by the staff terminal 1.

For example, the camera staff starts an application program by using the staff terminal 1 to perform an operation for a preparation process. The staff terminal 1 executes processing in step S10 and following steps by using the CPU 71 according to this operation.

In step S10, the staff terminal 1 performs a process for project creation. This is a process for setting an event for which an image collection is to be created.

For example, a project list screen 110 is displayed on the display unit 77 of the staff terminal 1 having started the application program as depicted in FIG. 10A.

The project list screen 110 includes a list region 111 where a list of event names corresponding to individual project targets is displayed. The project list screen 110 further displays an addition icon 112, a camera icon 134, a menu icon 127, and others.

The camera staff creates a target project for which an image collection is to be created, on the project list screen 110 thus configured. For example, the camera staff performs an operation for creating one project by inputting an event name or the like.

For example, an unillustrated project setting screen is displayed by operation of the addition icon 112. A title of the project (e.g., event name), time and date of the event, a place of the event, whether or not to apply auto-retouch setting, and the like are settable in this screen.

The camera staff inputs items appropriately to perform an operation for setting project contents. The staff terminal 1 creates one project according to this operation, and displays the created project in the list region 111.

FIG. 10B depicts an example where two projects named "event1" and "event2" are displayed. For example, information indicating an event name, time and date, a place, and the like is presented for each project.

In step S10 in FIG. 9, the staff terminal 1 performs control for providing a user interface having the above screen by using the function of the UI control unit 31, to execute a project creation process according to an operation performed by the camera staff.

Note that this project creation process is performed in an on-line connection state between the staff terminal 1 and the server device 4, for example. In this case, the staff terminal 1 transmits information used for a synchronization process to the server device 4 according to contents of the operation performed by the user, by using the function of the communication control unit 32.

As a result, the entry state of the information as one project is also synchronously achieved in the server device 4.

In step S11 in FIG. 9, the staff terminal 1 provides transfer setting. This transfer setting is setting of FTP transfer between the staff terminal 1 and the imaging device 2, such as setting of a file format for transfer and an FTP connection server, for example.

The staff terminal 1 executes display of a transfer setting screen for the camera staff, by using the function of the UI control unit 31, to provide necessary transfer setting according to an operation performed by the camera staff.

In step S12, the staff terminal 1 provides auto-retouch setting. The auto-retouch setting is a process for setting parameters for an image editing process applied in common to respective images.

The staff terminal 1 executes display of an auto-retouch setting screen for the camera staff, by using the function of the UI control unit 31, to provide necessary auto-retouch setting according to an operation performed by the camera staff. The parameters of the auto-retouch setting are described in the event data 60 of the created project, as the prior setting information 61.

Moreover, this auto-retouch setting is also provided in the on-line connection state between the staff terminal 1 and the server device 4, for example. The staff terminal 1 transmits parameter information indicating the auto-retouch setting to the server device 4 to achieve the synchronization process.

As a result, the server device 4 can also store the prior setting information 91 having the same contents as the prior setting information 61 included in the event data 60, as the event data 90 of the corresponding project.

In step S13, the staff terminal 1 provides watermark setting. For example, a photographer name or the like can be inserted into an image of the web gallery, as a watermark (digital watermark). The watermark setting is a process for setting the presence or absence and contents of the watermark.

The staff terminal 1 executes display of a watermark setting screen for the camera staff, by using the function of the UI control unit 31, to provide necessary watermark setting according to an operation performed by the camera staff. Information indicating the watermark setting is also described in the event data 60 of the created project, as the prior setting information 61.

Moreover, this watermark setting is also provided in the on-line connection state between the staff terminal 1 and the server device 4. The staff terminal 1 transmits the information indicating the watermark setting to the server device 4 to achieve the synchronization process.

As a result, the server device 4 can also store the prior setting information 91 in the event data 90 of the corresponding project, as information synchronized with the prior setting information 61.

Note that steps S11, S12, and S13 described above may be carried out in a different order. Moreover, the processing in the respective steps is not required to be performed as a series of processes. For example, the processing may be executed for each operation performed by the user during operation.

Further, the processing in the respective steps may be skipped when unnecessary. For example, the transfer setting in step S11 may be provided every time a project is created in step S10. However, when no change of setting is particularly needed after FTP transfer setting is performed once, the process may proceed to step S12 while skipping step S11 after completion of project creation in step S10. Needless to say, this is applicable to the processing in steps S12 and S13. In a case where no change is particularly needed after setting, these steps may be skipped.

Moreover, communication with the server device 4 for synchronization may be achieved at a timing of each processing. Alternatively, synchronization between the prior setting information 61 and the prior setting information 91 may be achieved by collectively transmitting such pieces of information indicating several settings at the time of completion of these settings.

Furthermore, in a case where any contents have been set in an environment where on-line connection with the server device 4 is disabled, it is sufficient if the set information is transmitted for synchronization between the prior setting information 61 and the prior setting information 91 at the time when an on-line connection state is achieved.

### <4. Transfer/editing process>

Next described with reference to FIG. 11 will be a specific processing example of the staff terminal 1 in step S2 in FIG. 2. Specifically, this processing example is a process executed by the staff terminal 1 by mainly using the functions of the event data management unit 30 and the communication control unit 32 in FIG. 4 while a wedding is being held.

The staff terminal 1 checks whether or not image file transfer from the imaging device 2 has been started in step S101 in FIG. 11. The process in FIG. 11 is not particularly performed during a period of no image transfer.

For example, during the wedding, the photographer captures images of scenes of a ceremony and a reception by using the imaging device 2. For example, the imaging device 2 sequentially transfers image files to the staff terminal 1 automatically or according to an operation performed by the photographer after capturing still images, for example. Note that this transfer timing is only an example. This transfer may be performed for each capturing of one image, or multiple images may collectively be transferred.

Moreover, in a case of video taking, transfer may be achieved during a period of no recording for each recording start and stop, or may be achieved during a recording period after a recording start. All the recorded pictures may be transferred, or pictures of only a predetermined initial period may be transferred.

Moreover, the photographer may add rating information to the captured images by operating the imaging device 2. For example, rating information is input by checking of an image immediately after the image is captured. This rating information is described in metadata.

Transfer of an image file containing image data and metadata may be executed in response to checking of the captured image and input of rating information by the photographer, for example.

When detecting a start of transfer of the image file described above, the staff terminal 1 advances the process from step S101 to step S102 to perform a reception process for receiving the image data and the metadata. In this case, the received image data is managed in the imaging and editing information table 62 of the event data 60 as original image data. In addition, the received metadata is also managed in association with the image data.

In step S103, the staff terminal 1 performs an image compression process. For example, the staff terminal 1 performs the compression process in such a manner as to increase a compression rate of the received image data. This is a process for generating image data to be transmitted to the server device 4.

In step S104, the staff terminal 1 manages rating information. This is a process for checking the metadata of the received image file, extracting rating information given from the imaging device 2 side, and managing the rating information in such a manner as to be updatable in the imaging and editing information table 62 of the event data 60.

In step S105, the staff terminal 1 transmits information to the server device 4 for synchronization between the event data 60 and the event data 90. In this case, the staff terminal 1 transmits the image data, the metadata, and the rating information compressed in step S103 to the server device 4. The server device 4 side updates the event data 90 in response to reception of these pieces of data and information, to maintain a synchronous state with the event data 60.

In step S106, the staff terminal 1 performs an auto-retouch application process. Specifically, the staff terminal 1 performs image processing for the original image data by using retouch parameters automatically set by prior setting, to generate editing image data, and manages the generated editing image data in the imaging and editing information table 62.

This editing image data is generated for UI display by the staff terminal 1.

While the auto-retouch application process is performed as processing at the time of reception of the image file in this example, the auto-retouch application process may be executed as necessary on other occasions, such as a time when display of one image is required.

Moreover, the image processing may be performed for the compressed image data generated in step S103. In that case, the order of processing of step S105 and step S106 may be switched, for example, to transmit the compressed image data to the server after completion of image processing for applying auto-retouch to the compression image data.

After the processes in FIG. 11 described above are performed, the staff terminal 1 is brought into such a state as to import images according to imaging by the photographer and manage information corresponding to the images in the event data 60. For example, all of captured images are brought into a state managed in the event data 60 at the time of the end of the wedding.

Moreover, after transmission for sequential synchronization, the event data 90 on the server device 4 side comes into a state synchronized with the event data 60 on the staff terminal 1 side in the middle of or at the end of the wedding.

In addition, even in this stage of the process in FIG. 11, the camera staff can check a status of importing images to the staff terminal 1 and the like by display of a list of images transferred from the imaging device 2 and a communication status on an event screen 120 described later or the like.

### <5. Selection process>

Next, a detailed processing example of the selection in step S3 in FIG. 2 will be described with reference to flowcharts illustrated in FIG. 12 to FIG. 17 and screen examples depicted in FIG. 18 to FIG. 23.

Note that FIGS. 12 to 17 present a series of flowcharts as divisions of one continuous flowchart. Each of "c1," "c2," "c3," "c4," "c5," "c6," and "c7" represents a connection relation between these flowcharts.

Processes performed in these flowcharts are processes achieved by the functions of the event data management unit 30, the UI control unit 31, and the communication control unit 32 illustrated in FIG. 4.

Step S201 in FIG. 12 represents a process for displaying a list of projects (e.g., event names) on the project list screen 110 depicted in FIG. 10B.

In step S202, the staff terminal 1 monitors whether or not a project selection operation has been performed on the project list screen 110. Moreover, in step S203, the staff terminal 1 monitors an ending operation of an application program.

After completion of the ending operation of the application program, the application program is closed to end the process.

In a case where the selection is to be made immediately after the wedding, for example, the camera staff performs an operation for selecting a target project on the project list screen 110. For example, the camera staff performs such an operation as tapping one of projects displayed in the list region 111.

When detecting such an operation, the staff terminal 1 advances the process from step S202 to step S204 to acquire latest event data of the selected project. For example, the staff terminal 1 requests the server device 4 to transmit the event data 90 of the selected project, and imports the transmitted event data 90. Thereafter, the staff terminal 1 compares the event data 90 with the event data 60 retained in the staff terminal 1, and updates the event data 60 to latest information contents. For example, the staff terminal 1 makes a comparison between the event data 60 and the event data 90 with respect to any information as a reference for determining newness of information, such as update time-date information and version management information, and updates the event data 60 to latest information contents if any difference is recognized.

For example, assuming that the staff terminal 1 is the terminal device 1A carried by the photographer, rating information or selection information input from the assistant on the terminal device 1B side during the wedding may not be reflected in the event data 60 of the terminal device 1A.

Moreover, in a case of inputting the rating information and the selection information from the terminal device 1B carried by the assistant, it is appropriate for the assistant to input the rating information and the selection information with reference to the latest information on the terminal device 1A side.

Accordingly, the staff terminal 1 is configured to receive the event data 90 of the server device 4 to which the latest information has been transmitted from both the terminal devices 1A and 1B, and update the information included in the event data 60 retained by the staff terminal 1 if the event data 60 is not the latest information.

However, there is a case where only one staff terminal 1 is present, in which situation the information retained in the staff terminal 1 is always the latest information. In such a case, the processing in step S204 may be eliminated.

Subsequently, the staff terminal 1 proceeds to step S211 in FIG. 13 to display a list of event images. For example, an event screen 120 depicted in FIG. 18 is displayed.

An event title 121 as well as an all flag icon 123, a next icon 132, a camera icon 134, a menu icon 127, and others are displayed in the event screen 120.

The menu icon 127 is an operator for displaying various types of menu items.

The camera icon 134 is an icon for displaying a state of FTP communication with the imaging device 2, for example.

The all flag icon 123 is an operator for providing on/off setting for a flag (selection flag) corresponding to use image information for all images.

The next icon 132 is an operator for transition to a next screen.

Moreover, the event screen 120 includes an image region 128 where a list of images transferred from the imaging device 2 is displayed as thumbnail images. For example, images are displayed in chronological order according to imaging time.

Further, an all tab 125 and a candidate tab 126 are provided with respect to display of the image region 128.

When the all tab 125 is selected, the images transferred from the imaging device 2 are displayed in the image region 128 regardless of an on-state or an off-state of the flag corresponding to the use image information. For example, it is assumed that FIG. 18 presents display of a list when the all tab 125 is selected.

On the other hand, when the candidate tab 126 is selected, displayed in the image region 128 is a list of only the images corresponding to flag-on setting among all the images transferred from the imaging device 2. For example, FIG. 19 presents an example of display of a list when the candidate tab 126 is selected.

The on/off of the flag is set for each image by an operation performed by the camera staff according to whether or not the corresponding image is to be included in the web gallery.

In addition, the event screen 120 includes a filter designation region 129. Images can be narrowed down by six-level rating, for example, using the filter designation region 129. For example, operators indicating the number of stars are provided, and filtering is performed according to the designated operator to display a list of extracted images in the image region 128.

For example, in a case where the operator corresponding to three stars is operated, images corresponding to rating information indicating three stars or more (i.e., images corresponding to any one of "three stars," "four stars," and "five stars") are extracted, and a list of the extracted images is displayed. Alternatively, in this case, only the images corresponding to the rating information indicating "three stars" may be extracted, and a list of these images may be displayed.

Moreover, the filter designation region 129 indicates the number of images for which corresponding rating has been set, together with the operator expressed by the number of stars.

In the state where the event screen 120 thus configured is displayed in step S211, the staff terminal 1 performs a monitoring loop from step S212 to step S219 in FIG. 14.

In step S212 in FIG. 13, the staff terminal 1 monitors an operation of the next icon 132. A process performed in a case of detection of the operation of the next icon 132 will be described later.

In step S213, the staff terminal 1 monitors a tab switching operation. The tab switching operation is an operation of the candidate tab 126 during display of the list corresponding to the all tab 125, or an operation of the all tab 125 during display of the list corresponding to the candidate tab 126.

When detecting the tab switching operation, the staff terminal 1 performs a switching process for switching the contents in the display of the list in the image region 128 according to the selected tab in step S220.

In step S214, the staff terminal 1 monitors a pinch operation performed by the camera staff in the image region 128. The pinch operation referred to here is a pinch-out operation for image enlargement and a pinch-in operation for image reduction.

When detecting the pinch operation, the staff terminal 1 enlarges or reduces a display state in the image region 128 in step S221.

FIGS. 20A, 20B, and 20C each depict an example of a display change in the image region 128 according to pinch-in or pinch-out.

FIG. 20A depicts a normal display state similar to the display state in FIG. 18. When the pinch-out operation is performed, the images displayed in a list are enlarged as depicted in FIG. 20B. Further enlargement is achieved as depicted in FIG. 20C by the further pinch-out operation.

In addition, when the pinch-in operation is performed, the state in FIG. 2C is reduced to the state depicted in FIG. 20B, and returns to the state depicted in FIG. 20A by the further pinch-in operation.

Further, while not displayed in the normal display state in FIG. 20A, a rating icon 130 and a flag setting icon 131 are displayed in correspondence with images in this example as depicted in FIG. 20B and FIG. 20C in a stage of enlargement achieved by the pinch-out operation. In other words, when each of the images has a size easily viewable or a size easily operable, the rating icon 130 and the flag setting icon 131 are displayed in correspondence with the images.

In addition, needless to say, the rating icon 130 and the flag setting icon 131 may be displayed in correspondence with the images even in the state depicted in FIG. 20A.

In step S221 in FIG. 13, the staff terminal 1 performs a process for changing the display state in the image region 128 in association with the pinch operation as in the example described above.

The rating icon 130 is an operator operated not only to display rating information set as the number of stars, but also to change rating. For example, the number of stars can be changed by tapping or sliding a portion corresponding to the rating icon 130. This operation is defined as a rating change operation.

Moreover, for example, the flag setting icon 131 expresses on/off of the flag by changing the color, the luminance, or the like of the icon, for example. Furthermore, the flag setting icon 131 also functions as an operator for switching between on and off of the flag. For example, switching between on and off of the flag is achieved by a tap operation.

In step S215, the staff terminal 1 monitors whether or not an operation for selecting one of the images displayed in the image region 128 has been performed. For example, this operation is an operation for tapping one thumbnail image. A process performed in a case of detection of this selection operation will be described later.

In step S216, the staff terminal 1 monitors a filtering operation. Specifically, this operation is an operation of an operator indicating rating of the filter designation region 129.

In a case of detection of an operation of any one of operators in the filter designation region 129, the staff terminal 1 proceeds to step S223 to perform filtering according to the detected operator and extract corresponding images. Thereafter, in step S224, a list of the extracted images is displayed in the image region 128.

In step S217 in FIG. 14, the staff terminal 1 monitors a rating operation. For example, this operation is an operation performed for the rating icon 130 as depicted in each of FIG. 20B and FIG. 20C.

In a case of detection of the operation for the rating icon 130, the staff terminal 1 proceeds to step S230 to update the event data 60 such that rating information associated with images corresponding to the rating icon 130 has a value corresponding to the operation.

Moreover, in step S231, the staff terminal 1 transmits the updated rating information to the server device 4 to update the event data 90 on the server device 4 side. In other words, a synchronous state is maintained.

In step S218, the staff terminal 1 monitors a flag on/off operation. For example, this operation is an operation performed for the flag setting icon 131 as depicted in each of FIG. 20B and FIG. 20C.

In a case of detection of the operation for the flag setting icon 131, the staff terminal 1 proceeds to step S232 to update the event data 60 such that switching is achievable between on and off of the flag of the selection information associated with images corresponding to the flag setting icon 131.

Moreover, in step S233, the staff terminal 1 transmits the updated flag information to the server device 4 to update the event data 90 on the server device 4 side. In other words, the synchronous state is maintained.

In step S219, the staff terminal 1 monitors an operation of the all flag icon 123.

In a case of detection of an operation performed for the all flag icon 123, the staff terminal 1 proceeds to step S234 to branch the process according to whether or not all the images are flag-on images. When all the images are not flag-on images, i.e., when some of the images are flag-on images or when all of the images are flag-off images, the staff terminal 1 proceeds to step S236 to update the event data 60 such that all the images become flag-on images.

On the other hand, when the all flag icon 123 is operated in a state where all the images are flag-on images, the staff terminal 1 proceeds to step S235 to update the event data 60 such that all the images become flag-off images.

Moreover, in step S237, the staff terminal 1 transmits the updated flag information to the server device 4 to update the event data 90 on the server device 4 side. In other words, the synchronous state is maintained.

Subsequently described will be a process performed in a case of detection of the image selection operation in step S215 in FIG. 13. In this case, the process performed by the staff terminal 1 proceeds to step S250 in FIG. 15 to display one display screen 140 depicted in FIG. 21.

One display region 142 is provided in the one display screen 140 to display a selected image in a larger size in the one display region 142.

An image displayed in the one display region 142 is an image formed from editing image data managed in the event data 60, for example. Specifically, this image is a reproduction image formed from editing image data generated by the auto-retouch processing in step S106 in FIG. 11, and from image data reflecting retouch parameters included in the prior setting information 61.

Moreover, a focus point mark 149 indicating a focal position within the image is displayed in the image depending on circumstances.

Further, a return icon 133, which is an operator for turning display back to the event screen 120, and the rating icon 130 and the flag setting icon 131 for the displayed image are displayed in the one display screen 140.

In addition, an editing icon 145, a focus point operation icon 146, an export icon 147, and an original icon 148 for operations associated with the displayed image are displayed in the one display screen 140.

The staff terminal 1 performs a monitoring loop process from step S251 to step S257 in FIGS. 15 and 16 in a state where the one display screen 140 thus configured is displayed.

In step S251, the staff terminal 1 monitors an operation of the editing icon 145.

In a case of detection of the operation of an operator of the editing icon 145, the staff terminal 1 proceeds to step S260 to display an unillustrated editing screen. For example, a user interface allowing such operations as a retouch operation and an inclination correction operation is provided in the editing screen. The camera staff is allowed to perform an image editing operation by using this user interface.

For example, a luminance adjustment value, a color adjustment value, a contrast adjustment value, a sharpness adjustment value, and the like can be set as retouch parameters for the retouch operation.

For example, an operator for adjusting an angle of each image is provided in the inclination correction operation.

Note that the editing screen may be a screen different from the one display screen 140, or may be a screen superimposed on the one display screen 140 to display various operators on the screen.

In a case of detection of the retouch operation, the staff terminal 1 proceeds from step S261 to step S262 to perform a retouch process. This process is a process for further editing the editing image data by using the retouch parameters input by an operation performed by the camera staff. Moreover, the retouch parameters input in this case are stored in the event data 60 as editing information associated with individual image data.

In a case of detection of the inclination correction operation, the staff terminal 1 proceeds from step S263 to step S264 to perform an image inclination correction process. This process is a process for editing the editing image data by using inclination correction parameters input according to an operation performed by the camera staff. Moreover, the inclination correction parameters input in this case are stored in the event data 60 as editing information associated with individual image data.

When detecting an end of the editing operation in step S265, the staff terminal 1 in step S266 transmits the editing information included in the event data 60 and updated according to the editing process to the server device 4 to update the event data 90 on the server device 4 side. In other words, the synchronous state is maintained.

In step S267, the staff terminal 1 ends the editing screen, and returns to the normal one display screen 140. At this time, an editing result is reflected in the displayed image.

In such a manner, the camera staff is allowed to perform any image retouch and inclination correction according to an operation performed by using the editing icon 145.

In step S252, the staff terminal 1 monitors an operation of the focus point operation icon 146 in the display state of the one display screen 140.

In a case of detection of the operation of the focus point operation icon 146, the staff terminal 1 proceeds to step S270 to branch the process according to whether or not the focus point mark 149 is currently being displayed in the image in the one display region 142.

If the focus point mark 149 is not currently being displayed, the staff terminal 1 proceeds to step S271 to acquire information associated with the focus point of the displayed image. The focus point is information which indicates a position corresponding to a focused state produced by the imaging device 2 within the image during imaging, and is described in metadata. For example, the focus point is described as coordinate information indicating one point within the image.

The staff terminal 1 acquires information associated with the focus point from the metadata of the displayed image, and displays the focus point mark 149 in the displayed image according to this information as depicted in FIG. 21. For example, the focus point mark 149 is displayed as a region having predetermined expansion around the coordinate information that indicates one point within the image and that is stored as the focus point. As a result, the user can check an object in a focused state during imaging.

Note that the "expansion" described above as the region indicated by the focus point mark 149 may be variable. For example, a volume of expansion may be varied according to the position in the image or an object obtained by object recognition. For example, at the time of focus on the pupil of a person in FIG. 21, the focus point mark 149 may be displayed in a narrow region corresponding to the pupil. At the time of focus on a bouquet, the focus point mark 149 may be a wide region displayed in such a manner as to contain the whole bouquet.

Moreover, the focus point mark 149 is displayed in a form of a mark indicating four corners (a quadrangle expressed by brackets) in FIG. 21. However, other display forms such as a quadrangular frame and a circular frame may be adopted.

Further, while FIG. 21 depicts a case where only one focus point is produced, also possible is such a case where multiple focus points are produced, such as a case of focus on multiple portions of an object (e.g., bride) in an image and a case of focus on a part of each of multiple objects (e.g., bride and bridegroom). Accordingly, the metadata as the focus point may include description of multiple coordinate positions. In that case, multiple focus point marks 149 are displayed in correspondence with these positions.

Moreover, while the focus point mark 149 is displayed in the one display screen as depicted in FIG. 21, the focus point mark 149 may be displayed in the image included in the list of images in the image region of the event screen depicted in FIG. 18, for example.

In a case of detection of an operation of the focus point operation icon 146 in step S252 during display of the focus point operation icon 146, the staff terminal 1 proceeds from step S270 to step S273 to end display of the focus point operation icon 146.

Accordingly, the camera staff is allowed to turn on or off the display of the focus point mark 149 by using the focus point operation icon 146.

In step S253 in FIG. 16, the staff terminal 1 monitors an operation of the export icon 147 in the display state of the one display screen 140.

In a case of detection of the operation of the export icon 147, the staff terminal 1 proceeds to step S280 to perform an export process. Specifically, the export process for exporting information associated with displayed image data is performed.

In step S254, the staff terminal 1 monitors an image switching operation. The image switching operation in this case is an operation of the original icon 148.

In a case of detection of the operation of the original icon 148, the staff terminal 1 proceeds to step S281 to switch between images based on original image data and images based on editing image data. Specifically, when reproduction images based on the editing image data are currently being displayed, display is switched to reproduction images based on the original image data. Meanwhile, when reproduction images based on the original image data are currently being displayed, display is switched to reproduction images based on the editing image data.

Accordingly, the camera staff is allowed to visually compare edited images and original images in any manner by the operation of the original icon 148.

The rating icon 130 of the currently displayed image is displayed in the one display screen 140.

In step S255, the staff terminal 1 monitors a rating operation.

In a case of detection of the operation for the rating icon 130, the staff terminal 1 proceeds to step S282 to update the event data 60 such that rating information associated with the displayed image has a value corresponding to the operation.

Moreover, in step S283, the staff terminal 1 transmits the updated rating information to the server device 4 to update the event data 90 on the server device 4 side. In other words, the synchronous state is maintained.

The flag setting icon 131 of the currently displayed image is displayed in the one display screen 140.

In step S256, the staff terminal 1 monitors a flag on/off operation, i.e., an operation of the flag setting icon 131.

In a case of detection of the operation for the flag setting icon 131, the staff terminal 1 proceeds to step S284 to update the event data 60 such that switching is achievable between on and off of the flag of the selection information associated with the displayed image.

Moreover, in step S285, the staff terminal 1 transmits the updated flag information to the server device 4 to update the event data 90 on the server device 4 side. In other words, the synchronous state is maintained.

In step S257, the staff terminal 1 monitors an operation of the return icon 133.

In a case of detection of the operation of the return icon 133, the staff terminal 1 proceeds to step S211 in FIG. 13 to end the one display screen 140 and return to a state of display of the event screen 120.

Subsequently described will be a process performed in a case of detection of an operation of the next icon 132 in step S212 in FIG. 13.

In this case, the process performed by the staff terminal 1 advances to step S300 in FIG. 17 to display a cover-highlight selection screen 150 depicted in FIG. 22.

The cover-highlight selection screen 150 is a screen used by the camera staff to perform an operation of selecting an image as a cover (front cover) of a web gallery or an image for highlight (emphasized display).

The return icon 133 and the next icon 132 are displayed in the cover-highlight selection screen 150.

Moreover, in the cover-highlight selection screen 150, a list designation region 153 is provided, and a candidate tab 151 and a selection tab 152 are provided.

When the candidate tab 151 is selected, a list of images corresponding to flag-on images (i.e., images selected to be included in the web gallery) is displayed in the list designation region 153.

Moreover, a highlight button 155 and a cover button 156 are displayed for each image. The highlight button 155 is an operator for designating a highlight image, while the cover button 156 is an operator for designating a cover image.

Note that the highlight button 155 may express the presence or absence of current highlight setting by a display mode of the highlight button 155, and that the cover button 156 may express a current cover setting state by a display mode of the cover button 156.

When the selection tab 152 is selected, a list of images each designated as a cover image or a highlight image is displayed in the list designation region 153.

The camera staff operates the cover-highlight selection screen 150 thus configured, to select a cover image or a highlight image.

In the state where the cover-highlight selection screen 150 is displayed in step S300 in FIG. 17, the staff terminal 1 performs a process of a monitoring loop from step S301 to step S305.

In step S301, the staff terminal 1 monitors an operation of the cover button 156.

In a case of detection of the operation for the cover button 156, the staff terminal 1 proceeds to step S310 to set cover image information included in the selection information, in such a manner as to set a corresponding image as a cover image, and to update the event data 60.

Moreover, in step S311, the staff terminal 1 transmits the updated selection information to the server device 4 to update the event data 90 on the server device 4 side. In other words, the synchronous state is maintained.

In step S302, the staff terminal 1 monitors an operation of the highlight button 155.

In a case of detection of the operation for the highlight button 155, the staff terminal 1 proceeds to step S320 to set emphasis display image information included in the selection information, in such a manner as to set a corresponding image as a highlight image, and to update the event data 60.

Moreover, in step S321, the staff terminal 1 transmits the updated selection information to the server device 4 to update the event data 90 on the server device 4 side. In other words, the synchronous state is maintained.

In step S303, the staff terminal 1 monitors a tab switching operation. The tab switching operation in this case is an operation of the selection tab 152 during display of the list corresponding to the candidate tab 151, or an operation of the candidate tab 151 during display of the list corresponding to the selection tab 152.

When detecting the tab switching operation, the staff terminal 1 performs a switching process for switching the contents of the list in the list designation region 153 according to the selected tab in step S330.

In step S305, the staff terminal 1 monitors an operation of the return icon 133. When detecting an operation of the return icon 133, the staff terminal 1 proceeds to step S211 in FIG. 13 to return to a state of display of the event screen 120.

As a result, the camera staff can interrupt cover-highlight designation, or resume selection from the flag setting.

When the operation in the cover-highlight selection screen 150 is completed, the camera staff operates the next icon 132.

In step S304 in FIG. 17, the staff terminal 1 monitors an operation of the next icon 132. When detecting the operation of the next icon 132, the staff terminal 1 proceeds to step S340 to display a confirmation screen.

FIG. 23 depicts an example of a confirmation screen 160. The return icon 133 and the next icon 132 as well as a detailed region 161 are prepared for the confirmation screen 160 to display final confirmation contents in the confirmation screen 160. For example, such detailed information as the number of images which are to be included in a web gallery and to which a flag is given, the number of images for highlight display, a title, and time and date is displayed.

The staff terminal 1 monitors an operation of the next icon 132 in step S341 in FIG. 17, and monitors an operation of the return icon 133 in step S342.

When detecting the operation of the return icon 133, the staff terminal 1 returns to step S300 to return to the state of display of the cover-highlight selection screen 150.

When detecting the operation of the next icon 132, the staff terminal 1 proceeds to step S343 to transmit a web gallery creation request to the server device 4.

Thereafter, the staff terminal 1 proceeds to step S201 in FIG. 12 to return to the state of display of the project list screen 110. Note that the staff terminal 1 in this case may proceed to step S211 in FIG. 13 to return to the event screen 120.

Meanwhile, in the selection process described above, the camera staff is required to sequentially repeat determination as to whether or not an image is to be selected as an image to be included in the web gallery (flag on/off). Accordingly, even in a case where multiple similar images (images of a similar object or of an object having a similar pose or a similar angle of view, or the like) are successively captured (i.e., also referred to as a case where an identical scene is captured), determination of flag on/off needs to be made after browsing similar images one by one at the time of browsing. In a case where the input unit 76 of the staff terminal 1 is assumed to be a touch panel, a flick operation for the touch panel needs to be repeated for all images.

For example, in a case where images of an identical scene continue, it is efficient to perform a display process in such a manner as to display images of a next scene for browsing instead of displaying remaining images of the identical scene after determination of a predetermined number of flag-on images as images to be included in the web gallery.

A flow of a specific process will hereinafter be described. It is preferable, as a premise of this description, to recognize an imaging scene of images in reference to information indicating a type of an object of each of captured images, a pose, an angle of view, and an imaging time of the object, and the like. For example, a scene may be determined to have been changed at the time of a change of an analysis result obtained by object analysis of pictures in an order of imaging. In a case where the imaging device 2 has a function of recognizing scene information, multiple captured images can be grouped for each scene by adding scene information associated with the respective images to metadata of an image file transferred to the staff terminal 1. Alternatively, in a case where the staff terminal 1 has the function of recognition, the images can be grouped for each scene by the staff terminal 1. As a result, the staff terminal 1 can recognize breaks of the scenes between the multiple images. In either of these cases, the scene information associated with the respective images can be retained within the event data 60 in FIG. 5. The camera staff may input a scene name suited for each of the grouped scenes via the input unit 76, or the CPU 71 may access a predetermined database and automatically input the scenes.

Another processing example of the selection in step S3 in FIG. 2 will hereinafter be described with reference to a flowchart in FIG. 31 and a screen example in FIG. 32.

The process of the flowchart in FIG. 31 is a process performed by the function of the UI control unit 31 in FIG. 4. Note that the present processing example is also considered as an example of a case where the processing in steps S218, S232, and/or S233 in FIG. 14 is repeatedly performed for all images.

Step S381 in FIG. 31 is processing performed by the staff terminal 1 for displaying each of the images depicted in FIG. 20A, FIG. 20B, and FIG. 20C by way of example. In step S382, the staff terminal 1 monitors a flag on/off operation for the displayed image. For example, this operation is an operation performed for the flag setting icon 131 as depicted in each of FIG. 20B, and FIG. 20C.

In a case of detection of the operation for the flag setting icon 131, the staff terminal 1 updates the event data 60 such that switching is achievable between on and off of the flag of the selection information associated with images corresponding to the flag setting icon 131.

In step S383, the staff terminal 1 receives a result of the flag operation performed in step 382, and counts the flag-on number corresponding to the number of images determined as flag-on images in a grouped identical scene. In step S384, the staff terminal 1 compares a predetermined flag-on number determined beforehand for each scene with the flag-on number counted in step S383, to determine whether the flag-on number has reached the predetermined number. Note that the predetermined flag-on number may be determined beforehand by the camera staff for each scene, or may be determined according to the number of images in a group designated as an identical scene.

In a case of such a determination that the flag-on number has not yet reached the predetermined number, the staff terminal 1 proceeds to step S385 to monitor whether an operation for displaying the next image has been performed. In a case where this operation has been performed, the staff terminal 1 proceeds to step S386 to perform control for continuously displaying the next image in the identical scene. On the other hand, in a case of such a determination that the flag-on number has reached the predetermined number in step S384, the staff terminal 1 proceeds to step S387 to monitor whether an operation for displaying the next image has been performed. In a case where this operation has been performed, the staff terminal 1 proceeds to step S388 to perform control for displaying an image in a scene of the next group different from the scene of the current group. This process may be repeated until completion of processing for scenes of all groups. In addition, in a case of such a determination that the flag-on number has reached the predetermined number in step S384, the staff terminal 1 may proceed to step S388 without passing through step S387 to perform control for displaying the image in the scene of the next group different from the scene of the current group.

FIG. 32A and FIG. 32B each depict a screen example of a state of a display order of images. FIG. 32A is an example which sequentially displays all images (images A to E) regardless of scenes of the images. FIG. 32B is an example a case which does not display some of the images (skips display) according to scenes and the flag-on number.

For example, in a case where the image A is brought into flag-off in a scene SN1 where the predetermined flag-on number is designated as "1," the flag-on number becomes "0 (zero)" and does not reach the predetermined flag-on number. Accordingly, display control is performed to display the next image B in the scene SN1 as the identical scene as depicted in FIG. 32B. Subsequently, in a case where the image B is brought into flag-on, the flag-on number becomes "1." In this case, the flag-on number has reached the predetermined number. Accordingly, display control is performed to display the image D corresponding to an image of a next scene SN2 without the next image C in the identical scene being displayed, as depicted in the figure. Furthermore, in a case where the image D is brought into flag-on in the scene SN2 where the predetermined flag-on number is designated as "1", the flag-on number becomes "1," and reaches the predetermined number. Accordingly, an image in the next scene is displayed without the next image E in the identical scene being displayed.

Subsequently described will be a process for switching rating information and selection information between images as a further processing example of the selection process.

In the selection in step S3 in FIG. 2, there is sometimes a case where the camera staff intends to review again and replace the rating information and the selection information that have once been set. In such a case, these items of information may be changed by operating again the rating icon 130 and the flag setting icon 131. However, the selection process is more efficiently achievable if the rating information and the selection information given to two images are switchable to each other.

A further processing example of the selection in step S3 in FIG. 2 will hereinafter be described with reference to a flowchart in FIG. 33 and screen examples in FIGS. 34, 35, and 36. The process of the flowchart in FIG. 33 is a process performed by the function of the UI control unit 31 in FIG. 4.

Step S420 in FIG. 33 is a step performed by the staff terminal 1 to display the one display screen 140 as depicted in FIG. 34A. In FIG. 34A, parts identical to the corresponding parts in FIG. 21 are given identical numbers. However, a replacement icon 170 for issuing an instruction of replacement of information is newly added, and an image currently being displayed is designated as an image W. In step S421, the staff terminal 1 monitors an operation of the replacement icon 170. In a case of determination that the replacement icon 170 has been operated, the staff terminal 1 displays an image list containing images located near the currently displayed image, in step S422. The "near" images here may be images located nearby in terms of an imaging order, images located nearby in terms of a file name of image data, or images in an identical scene. FIG. 34B depicts a state where a list of an image X, an image Y, and an image Z is displayed below the image W as images near the image W.

In step S423, the staff terminal 1 monitors an operation for selecting an image from the image list. In a case where an image is selected from the list, the staff terminal 1 replaces information added to the original image with information indicating the selected image, in step S424, and displays the selected image in subsequent step S425. FIG. 34C depicts a state where the image Y is displayed with the rating information and the selection information associated with the original image W being replaced with the rating information and the selection information associated with the selected image Y according to selection of the image Y included in the near images in FIG. 34B.

Note that the processing in step S424 and the processing in step S425 may be switched, that is, step S425 may be performed before step S424.

The information replacement process in the foregoing example may be either a process for replacing both the rating information and the selection information, or may be a process for replacing only one of the rating information and the selection information. In such a case, an operation step for designating which information is to be replaced may be added.

FIG. 35 depicts conceptual diagrams illustrating a state where the rating information has been replaced. The rating information associated with the image W is "three stars," while the rating information associated with the image Y is "no star" as depicted in FIG. 35A. After the process of FIG. 33 corresponding to a replacement operation by the user, the rating information associated with the image W is replaced with "no star," and the rating information associated with the image Y is replaced with "three stars" as depicted in FIG. 35B.

FIG. 36 depicts conceptual diagrams illustrating a state where a flag corresponding to the selection information has been replaced. The image W is a flag-off image, while the image Y is a flag-on image as depicted in FIG. 36A. After the process of FIG. 33 corresponding to a replacement operation by the user, the image W is changed to a flag-on image, and the image Y is changed to a flag-off image as depicted in FIG. 36B.

### <6. Server process>

The process performed by the staff terminal 1 up to the selection stage in step S3 in FIG. 2 has been described. A process performed on the server device 4 side will be described here.

FIG. 24 presents a process performed by the server device 4 in correspondence with communication received from the staff terminal 1. Note that the process performed by the server device 4 described hereinafter refers to a process performed by the CPU 71 of the information processing device 10 having the functions depicted in FIG. 6. The process in FIG. 24 is a process executed mainly by the functions of the event data management unit 40 and the image collection creation unit 41.

In the stage of step S1 in FIG. 2, information indicating prior setting from the staff terminal 1 is transmitted to the server device 4.

When receiving information associated with project setting from the staff terminal 1, the server device 4 proceeds from step S500 to step S510 to perform a project setting process in the server device 4.

The communication for project setting received from the staff terminal 1 refers to communication provided for the server by the processing performed by the staff terminal 1 from step S10 to step S13 in FIG. 9. For example, information indicating an event name, time and date, a place, and the like of a created project is transmitted. The server device 4 sets a new project in reference to these items of information, and sets the event data 90 of the new project.

Moreover, the staff terminal 1 side provides not only the setting of the project itself, but also auto-retouch setting, water mark setting, and the like, and sequentially transmits the setting information to the server device 4. The server device 4 describes these items of information as prior setting information 91 included in the event data 90, to synchronize the event data 60 with the event data 60 in the prior setting state.

In the stage of step S2 in FIG. 2, images transferred from the imaging device 2, metadata containing rating information, and the like are transmitted to the server device 4 by the processing performed by the staff terminal 1 in step S105 in FIG. 11.

When receiving the images and the metadata from the staff terminal 1, the server device 4 proceeds from step S501 to step S520 in FIG. 24 to import the images and the metadata as information associated with the event data 90 of the corresponding project. The rating information contained in the metadata is extracted from the metadata, and managed in the event data 90 in a later updatable state.

In the stage of step S3 in FIG. 2, various types of information for maintaining synchronization with the imaging device 2 is transmitted from the staff terminal 1 to the server device 4 in the course of the processing of the staff terminal 1 from FIG. 12 to FIG. 17.

When receiving rating information from the staff terminal 1, the server device 4 proceeds from step S502 to step S530 in FIG. 24 to update rating information associated with corresponding images in the event data 90 of the corresponding project.

When receiving selection information from the staff terminal 1, the server device 4 proceeds from step S503 to step S540 to update selection information associated with the corresponding images in the event data 90 of the corresponding project.

Specifically, use image information provided by flag setting, cover image information indicating a cover, emphasis display image information provided by highlight setting, and the like are sequentially updated also on the server device 4 side.

When receiving editing information from the staff terminal 1, the server device 4 proceeds from step S504 to step S550 to update editing information associated with the corresponding images in the event data 90 of the corresponding project.

When receiving web gallery editing information from the staff terminal 1, the server device 4 proceeds from step S505 to step S560. This information is information transmitted from the staff terminal 1 in step S343 in FIG. 17.

In step S560 in FIG. 24, the server device 4 first performs an image editing process using parameters as editing information (containing editing information provided by the prior setting information 61) for the respective images designated as flag-on images as use image information to write out images for a web gallery. Specifically, respective editing images to be stored in the image folder 97 in FIG. 8 are formed.

In step S561 in FIG. 24, the server device 4 performs a web gallery creation process. Specifically, for example, the server device 4 generates the web gallery data 95 in FIG. 8 containing the web page setting information 96 and the image folder 97 as HTML data or the like, and enters the web gallery data 95 as a web page. As a result, a web gallery is created.

In step S562 in FIG. 24, the server device 4 transmits a URL (uniform resource locator) of the corresponding web gallery to the staff terminal 1. As a result, the staff terminal 1 is enabled to browse the web gallery.

Note that the web gallery is still in a state of private setting at this time. Only the staff terminal 1 corresponding to the URL transmission destination is in a browsable state.

The process described above is the process performed by the server device 4 in correspondence with the process performed by the staff terminal 1 up to step S3 in FIG. 2.

While not depicted in FIG. 24, the server device 4 performs a process for providing the event data 90 to the staff terminal 1 having logged in to the server device 4, as necessary (see description of step S201 in FIG. 12).

After the web gallery is created, a sharing request is transmitted from the staff terminal 1 to the server device 4 as the stage in step S4 in FIG. 2 (described below with reference to FIG. 25).

In that case, the staff terminal 1 proceeds from step S506 to step S570 in FIG. 24 to provide public setting for the corresponding web gallery. For example, the client terminal 5 is also enabled to browse the web gallery.

### <7. Web gallery delivery process>

Described with reference to FIG. 25 will be a process performed by the staff terminal 1 in the stage of the web gallery delivery process in step S4 in FIG. 2.

When a web gallery creation request is transmitted to the server device 4 as described above, a web gallery is created by the server device 4 in reference to the event data 90. Thereafter, a URL of a web page of this web gallery is transmitted. FIG. 25 presents a process performed by the staff terminal 1 after acquisition of the URL.

The staff terminal 1 accesses the web page by using the URL acquired in step S350. As a result, the staff terminal 1 is enabled to browse a preview of the web gallery.

This is browsing for a preview by the camera staff for checking. A preview screen 180 in FIG. 26 is an example of a web gallery for this previewing.

A web gallery created in a preview region 183 is displayed in the preview screen 180, and an edit button 181 and a share button 182 are provided for the preview screen 180.

Web gallery contents displayed in the preview region 183, i.e., the web gallery created by the server device 4, are configured such that images for which flag-on has been set are arranged in time series, for example. Moreover, an image for which cover image information has been set is displayed at the top as a cover. Further, an image for which highlight setting has been made according to emphasis display image information is displayed in a size larger than the size of images for which highlight setting is not made. Note that even each image for which highlight setting is not made may be automatically arranged in a large size. This arrangement is made for a purpose of balancing or sharpening the entire gallery.

The staff terminal 1 monitors a browsing end operation in step S351 in FIG. 25, monitors an operation of the edit button 181 in step S352, and monitors an operation of the share button 182 in step S353.

At the time of detection of the browsing end operation, browsing of the web page is ended.

When detecting the operation of the edit button 181, the staff terminal 1 proceeds to step S360 to perform an editing process.

The camera staff checks the web gallery contents in the preview region 183, and operates the edit button 181 as necessary to further edit the web gallery.

The staff terminal 1 displays an interface image for editing in the editing process in step S360, to receive an operation by the camera staff and edit the preview image according to the received operation. For example, a background color, a title font, a title color, a title position, music for a slideshow, and the like are editable.

Thereafter, editing information is transmitted to the server device 4 according to an editing completion operation to reflect the editing operation in the web gallery.

After completing the editing operation, the camera staff operates the share button 182 as necessary. In this case, the staff terminal 1 proceeds to step S370 to transmit a share request to the server device 4. As described above, the server device 4 provides public setting for the web gallery in response to the share request in step S570 in FIG. 24.

The staff terminal 1 performs a process corresponding to screen display and a screen operation of delivery completion of the web gallery in step S371 in FIG. 25.

For example, the staff terminal 1 displays a web gallery delivery screen 190 in FIG. 27. A notification of creation completion of the web gallery, an expiration date, and further, a URL 193 of the web gallery are displayed in the web gallery delivery screen 190. Moreover, a copy button 191 and a share button 192 are displayed.

The camera staff operates the copy button 191 to copy the URL, and transmits the URL to the client terminal 5 by attaching the URL to an e-mail or the like. Moreover, the camera staff operates the share button 192 to provide the URL for social media or the like and allow the client to browse the web gallery via the social media.

As a result, the client is enabled to browse the web gallery at an extremely early time point such as the current day after the end of the wedding.

Note that distribution of a URL to the client to allow browsing of an image collection as a web gallery is presented only by way of example. For example, image collection content corresponding to the above web gallery may be created, and distributed to the client as a content file.

### <8. Regular delivery process>

A regular delivery process is performed in the stage of step S5 in FIG. 2.

FIG. 28 depicts a process of the regular delivery stage. This is a process performed by the personal computer 3 or the staff terminal 1, for example. Hereinafter described will be a process performed by the personal computer 3.

The camera staff performs an operation by using the personal computer 3 to access the server device 4 and issue an information reading request for regular delivery in step S400.

Thereafter, the event data 90 is acquired from the server device 4 in step S401.

In this case, for example, the server device 4 may download rating information, selection information, or editing information as an XMP file, to apply the XMP file to a RAW image file in the personal computer 3.

Specifically, the rating information, use image information which indicates flag setting, cover image information which indicates designation as a cover image, emphasis display image information which indicates highlight setting, and the like are transferred to the personal computer 3.

Note that every event data 90 may be provided to the personal computer 3.

The camera staff imports the RAW image data that is image data captured by the imaging device 2 to the personal computer 3, and creates an image collection for regular delivery by using this RAW image data. In this case, creation work is efficiently achievable by acquisition of an XMP file based on the event data 90 from the server device 4.

The personal computer 3 performs a necessary editing process in step S402 to complete the image collection for regular delivery.

Subsequently, a process for regular delivery is performed in step S403. For example, processing to be performed includes creating content data corresponding to image collection content and electronically transmitting the created content data, recording the content data in a recording medium, or printing the content data to generate printing data.

Thereafter, the image collection including the created content data, the recording medium in which the content data is recorded, or the printed paper medium is delivered to the client.

### <9. Automatic setting process>

A series of processes from prior setting to regular delivery has been described above. Described here will be an automatic setting process capable of further increasing efficiency of the selection in FIG. 2 as a modified example.

FIG. 29 depicts an example of a process which automatically sets selection information by using the function of the automatic setting unit 33 in FIG. 4, in reference to tendency information generated according to previous selection information indicating selection by the camera staff who is a user of the staff terminal 1.

For example, the server device 4 manages the event data 90 associated with multiple projects of a certain camera staff. In this case, the server device 4 can generate tendency information indicating a selection tendency of this camera staff by performing a learning process for the event data 90 associated with the camera staff, with the function of the tendency information generation unit 44 in FIG. 6.

For example, the machine learning generates tendency information containing characteristic information associated with flag-on setting images, characteristic information associated with highlight setting images, characteristic information associated with a cover setting image, and the like by using learning data including the flag-on setting images, the highlight setting images, the cover setting image, and the like.

The staff terminal 1 side performs a process in FIG. 29 at a timing for displaying the event screen 120 in step S211 or other steps in FIG. 13 or at a timing before that timing, for example.

In step S600, the staff terminal 1 acquires the tendency information associated with this camera staff and generated by the server device 4.

In step S601, the staff terminal 1 makes determination for each of the images transferred from the imaging device 2, in reference to the tendency information, to determine whether each of the images has a characteristic of flag-on setting, a characteristic of highlight setting, a characteristic of cover setting, or the like.

In step S602, the staff terminal 1 automatically provides flag setting, highlight setting, or cover setting for each of the images according to a result of the above determination.

The camera staff is allowed to perform the selection operation described in FIGS. 13 to 17 in the state of the automatic setting described above. As a result, efficiency of the work performed by the camera staff is likely to improve.

Note that the foregoing process is also applicable to rating to achieve automatic rating information setting. Specifically, the server device 4 analyzes images of each rating level by using the event data 90 of previous projects of the camera staff with the function of the tendency information generation unit 44, to generate characteristic information associated with "no-star" images, characteristic information associated with "one-star" images, characteristic information associated with "two-star" images, characteristic information associated with "three-star" images, characteristic information associated with "four-star" images, and characteristic information associated with "five-star" images. Needless to say, it is also possible to generate only characteristic information associated with "five-star" images, for example, rather than generate all of these information.

Thereafter, the staff terminal 1 acquires tendency information containing the above information, and determines agreement with the characteristic information associated with the respective images to automatically set rating information for all or some of the images.

This automatic setting can also increase efficiency of the operation performed at the time of selection by the camera staff.

Next, FIG. 30 depicts an example where the staff terminal 1 performs a process for automatically setting selection information by using the function of the automatic setting unit 33, in reference to tendency information generated according to preference of the client user.

For example, the server device 4 determines preference from previous behaviors of the client (the bride who has ordered the image collection), and sets tendency information beforehand. For example, a tendency of preferred images is determined from behaviors of the client on social media (e.g., giving "like" to an image), images posted by the client on social media, and the like, and the tendency information is set according to this determination.

The staff terminal 1 side performs the process in FIG. 30 at a timing for displaying the event screen 120 in step S211 or other steps in FIG. 13 or at a timing before that timing, for example.

In step S610, the staff terminal 1 acquires the tendency information associated with the client of this project (e.g., bride) and generated by the server device 4.

In step S611, the staff terminal 1 makes determination for each of the images transferred from the imaging device 2, in reference to the tendency information, to determine whether each of the images has a characteristic agreeing with the preference of the client.

In step S612, the staff terminal 1 automatically provides flag setting for each of the images according to a result of the above determination. Specifically, images agreeing with the preference of the client are included the web gallery. Needless to say, highlight setting and cover setting may be provided.

The camera staff is allowed to perform the selection operation described in FIGS. 13 to 17 in the state of the automatic setting described above. As a result, it becomes more likely that efficiency of the work performed by the camera staff is increased and an image collection increasing satisfaction of the client is created.

Note that the foregoing process is also applicable to rating to achieve automatic rating information setting. Specifically, the server device 4 generates tendency information containing characteristic information associated with preferred images of the client, by using the function of the tendency information generation unit 44.

The staff terminal 1 acquires tendency information containing such characteristic information, and determines agreement with characteristic information associated with the respective images, to automatically set rating information.

This automatic setting of the rating information can also increase not only efficiency of the operation performed at the time of selection by the camera staff, but also satisfaction of the client.

### <10. Summary and modifications>

According to the above embodiment, advantageous effects described below are offered by the following configuration.

The staff terminal 1 according to the embodiment includes the event data management unit 30 which stores image data received via communication with the imaging device 2 and metadata (additional information) containing at least rating information corresponding to the image data, both as the event data 60 associated with a specific event, and updates the event data 60 according to operation input. Moreover, the staff terminal 1 has the UI control unit 31 which controls presentation of the images and the rating information associated with the event data 60 of the specific event as a project target, and detects the operation input. The staff terminal 1 further includes the communication control unit 32 which controls communication with the server device 4 disposed outside for synchronization between the event data 60 and the event data 90 according to storage or update of the event data 60.

Accordingly, the information processing device 10 as the staff terminal 1 performs an event data management process which includes a process for storing the image data received via communication of 2 with the imaging device and the additional information containing at least the rating information corresponding to the image data, both as the event data associated with the specific event, and an update process for updating the event data according to operation input, a UI control process which controls presentation of the images and the rating information associated with the event data of the specific event, and detects the operation input; and a communication control process which controls communication with the server device disposed outside for synchronization of the event data, according to storage or update of the event data.

The staff terminal 1 thus configured is capable of managing the images and the metadata sequentially transferred from the imaging device 2, as the event data of the specific event, and presenting these images and metadata to the camera staff in a list form, for example. Accordingly, the camera staff is capable of checking images constituting an image collection, such as a web gallery, by using the staff terminal 1.

Moreover, the rating information given to each of the images by the photographer using the imaging device 2 is also displayed as the rating icon 130 at this time. Accordingly, this rating information can support the camera staff such as the photographer himself or herself and the assistant at the time of selection of images to be included in the image collection.

Further, communication is performed to maintain a state of synchronization between the event data 60 of the staff terminal 1 (terminal devices 1A and 1B) and the event data 90 of the server device 4. Thus, even in a case where the assistant operates the terminal device 1B after the photographer completes such an operation as selection by using the terminal device 1A, for example, the terminal device 1B having logged in to the server device 4 is allowed to be operated in a state where latest event data contents synchronized with event data contents of the terminal device 1A are reflected. Accordingly, creation of the image collection is efficiently executable.

While the imaging device 2 and the staff terminal 1 have been presented as separate components, the imaging device 2 and the staff terminal 1 may be integrated into one device, for example.

According to the embodiment, the event data management unit 30 acquires event data of a specific event from the server device 4 in response to selection of the specific event (see step S204 in FIG. 12).

The event data of the server device 4 is synchronized through communication from the staff terminal 1. Accordingly, the event data of the server device 4 is the latest event data. When an application program is started in the staff terminal 1, a list of events is displayed. In a case where the user selects an event, latest event data can be acquired by first loading event data from the server device 4 side. Needless to say, the rating information is the latest information. For example, even in a case where the assistant uses the terminal device 1B, the assistant can check latest rating reflecting previous setting or change of rating made by the photographer with the imaging device 2 or the terminal device 1A.

According to the embodiment, the event data 60 contains the prior setting information 61. The UI control unit 31 displays images of image data contained in the event data 60 by using editing image data edited with reference to editing information contained in the prior setting information (see step S250 in FIG. 15).

Each of images captured and imported can be automatically edited and displayed by setting such editing information as retouch parameters as the prior setting information 61. This method is effective in a case where a unified atmosphere is to be given to each image in a web gallery or the like.

Moreover, automatic editing eliminates the necessity of performing a similar editing operation for individual images, and hence considerably facilitates work performed by the camera staff.

According to the embodiment, the UI control unit 31 performs control for providing a user interface allowing an editing information input operation for image data contained in the event data 60. The event data management unit 30 performs a process for updating the event data according to the editing information input operation (see step S251 and step S260 to step S267 in FIG. 15).

In the configuration allowing input of such editing information as retouch parameters, the camera staff is enabled to edit individual images in any manner, for example.

Particularly, by editing the respective images in correspondence with the retouch parameters of prior setting, fine adjustment and an atmosphere change for the respective images are achievable after setting a common tone for the respective images, for example.

According to the embodiment, the UI control unit 31 performs control for providing a user interface allowing an input operation for inputting rating information associated with image data contained in the event data 60. The event data management unit 30 performs a process for updating the event data according to the input operation for inputting the rating information (see steps S217, S230, and S231 in FIG. 14, steps S255, S282, and step S283 in FIG. 16, and others).

For example, in the configuration allowing input of the rating information, the camera staff is enabled to change rating set by the camera staff for the individual images during imaging, in any manner later, for example. More appropriate selection may be achievable by reviewing images and resetting rating after the end of the wedding, for example.

According to the embodiment, the UI control unit 31 performs control for providing a user interface allowing a setting operation for setting selection information for selective use of the image data contained in the event data 60 and creation of an image collection. The event data management unit 30 performs a process for updating the event data according to the setting operation for setting the selection information (see steps S218, S219, and S232 to S237 in FIG. 14, steps S256, S284, and S285 in FIG. 16, steps S301, S302, S310, S311, S320, and S321 in FIG. 17, and others).

By setting the selection information, an intention of the camera staff concerning the image collection can be added to the event data 60. In this case, such an image collection reflecting the intention of the camera staff can be created at the time of automatic creation of a web gallery by the server device 4 in reference to the synchronized event data 90. Accordingly, a web gallery reflecting the creation intention of the camera staff can be presented to the client extremely promptly.

According to the embodiment, the selection information contains the use image information indicating selection as images included in the image collection.

Specifically, a flag can be set as use image information indicating which images are to be included in the web gallery. The camera staff can easily set images to be included by switching between on and off of the flag.

According to the embodiment, the selection information contains cover image information indicating selection as a cover image of the image collection.

Specifically, a cover image can be set as selection information indicating which image is to be adopted as a cover of the web gallery. The camera staff can easily set an image to be adopted as a cover by setting the cover image.

According to the embodiment, the selection information contains emphasis display image information indicating selection as an image to be displayed with emphasis in the image collection.

Specifically, an image to be displayed with emphasis such as a larger size than sizes of other images in the web gallery can be selected by highlight setting. The camera staff is enabled to select an image to be emphasized by highlight setting. Moreover, a web gallery created with highlight setting constitutes an image collection which has been created automatically but is not monotonous.

Note that the server device 4 may be configured to create a web gallery which displays images with highlight for which highlight setting has not been made.

Further, highlight setting is not limited to a size increase, and also includes emphasis display using luminance, color, or frame display, for example.

In the example according to the embodiment described above, the staff terminal 1 includes the automatic setting unit 33 which performs a process for automatically setting selection information in reference to tendency information generated in reference to previous selection information associated with the camera staff.

Tendency information indicating which images are to be adopted, which images are to be designated as cover images, and which images are to be designated as highlight images is set by learning previous selection setting. Specifically, characteristic points of such images as images likely to be designated as flag-on images, images likely to be designated as highlight setting images, and images likely to be designated as cover images are analyzed and provided as tendency information. Automatically providing selection setting with use of this tendency information facilitates, to some extent, the work performed by the corresponding camera staff.

Needless to say, the camera staff is allowed to provide manual setting after the automatic selection setting. Accordingly, an image collection further reflecting the intention of the camera staff can be created.

In addition, automatic setting of the selection information may be performed on the server device 4 side, and event data reflecting this automatic setting may be supplied to the staff terminal 1.

Moreover, while the tendency information is generated on the server device 4 side according to the above description, the staff terminal 1 may include a tendency information generation unit to generate tendency information.

In the example according to the embodiment described above, the staff terminal 1 includes the automatic setting unit 33 which performs a process for automatically setting selection information in reference to tendency information generated according to preference of the client user.

The tendency information is generated by learning a tendency of preferred images of the client and analyzing characteristic points of the preferred images. Automatically providing selection setting with use of this tendency information enables easy creation of an image collection agreeing with the tendency of the client to some extent.

In addition, automatic setting of the selection information may be performed on the server device 4 side, and event data reflecting this automatic setting may be supplied to the staff terminal 1.

Moreover, while the tendency information is generated on the server device 4 side according to the above description, the staff terminal 1 may include a tendency information generation unit to generate tendency information.

The server device 4 according to the embodiment includes the event data management unit 40 which stores the event data 90 containing image data and rating information corresponding to the image data and manages update, in response to reception of information associated with a specific event from the staff terminal 1.

The server device 4 adds and updates the event data 90 such that the image data and the rating information transmitted from the staff terminal 1 can be reflected in the event data 90 of the specific event. Thus, the event data 90 synchronized with the images and the rating information of the event data 60 on the staff terminal 1 side can be stored. Particularly, the rating information is changeable in any manner on the staff terminal 1 side. This change can be reflected in the event data 90 of the server device 4 to retain the latest event data 90.

While the server device 4 receives the image data and the rating information corresponding to the image data from the staff terminal 1 in the above description, the server device 4 may receive transmission of metadata (additional information) containing the image data and the rating information corresponding to the image data directly from the imaging device 2.

The server device 4 according to the embodiment includes the event data supply control unit 42 which causes transmission for supply of event data to the staff terminal 1 to be performed.

The event data of the server device 4 is synchronized with the event data of the staff terminal 1 through communication from the staff terminal 1. Accordingly, the event data of the server device 4 is the latest event data. Display based on the latest event data is executable by supply of the event data to the staff terminal 1 in a case where an event is selected after a start of an application program in the staff terminal 1. Accordingly, the photographer and the assistant can perform various types of works in a latest state by using the staff terminal 1.

The event data management unit 40 of the server device 4 according to the embodiment stores and manages update of the event data 90 containing selection information or editing information corresponding to image data, in response to reception of information associated with a specific event from the staff terminal 1.

The server device 4 side also updates the event data in response to reception of editing information, such as retouch parameters, and selection information associated with flags, a cover, and highlights. As a result, a synchronous state with the event data of the staff terminal 1 can be maintained.

The server device 4 according to the embodiment includes the image collection creation unit 41 which creates a web gallery corresponding to image collection data associated with a specific event by using selection information and editing information.

The event data 60 and the event data 90 are synchronized with each other on the server device 4 side and the staff terminal 1 side. Accordingly, an image collection (web gallery) reflecting an intention of the camera staff who uses the staff terminal 1 can be created with reference to the edition information and the selection information included in the event data 90 on the server device 4 side.

Moreover, creation of the image collection on the server device 4 side can reduce a processing load imposed on the staff terminal 1 which is a terminal device having a small volume of resources.

According to the embodiment, selection information contained in the event data 90 on the server device 4 side includes use image information indicating selection as images to be included in the image collection.

Thus, an image collection (web gallery) including images selected by the camera staff who uses the staff terminal 1 can be created with reference to the selection information.

According to the embodiment, the selection information contained in the event data 90 on the server device 4 side includes cover image information indicating selection as a cover image of the image collection.

Thus, an image collection (web gallery) designating a cover image selected by the camera staff who uses the staff terminal 1 as a cover can be created with reference to the selection information.

According to the embodiment, the selection information contained in the event data 90 on the server device 4 side includes emphasis display image information indicating selection as an image to be displayed with emphasis in the image collection.

Thus, an image collection (web gallery) containing emphasized highlight images selected by the camera staff who uses the staff terminal 1 can be created with reference to the selection information.

The server device 4 according to the embodiment includes the data output unit 43 which transmits all or a part of the event data 90 to the terminal device (personal computer 3 or staff terminal 1) as a file in a predetermined format.

Accordingly, for example, the camera staff side can efficiently acquire materials of an image collection for regular delivery by using the personal computer 3 or the staff terminal 1, and easily create an image collection for regular delivery by performing necessary editing or the like.

According to the embodiment, while an image file received from the imaging device 2 is transferred to the staff terminal 1 and uploaded from the staff terminal 1 to the server device 4, the image file may be directly uploaded from the imaging device 2 to the server device 4.

According to the embodiment described above, creation of an image collection of still images is assumed. However, the image collection may contain a video as a part of content, or may include multiple videos. In these cases, the processes described in the embodiment are similarly applicable.

The video in this case may be either a video with sounds, or a video containing only image information without sounds.

A program according to the embodiment is a program which causes a CPU, a DSP, or the like, or a device including these, for example, to execute the processes presented in FIGS. 11 to 17 and FIG. 25. The program may further cause the CPU or the like to execute the processes presented in FIGS. 29 and 30.

Specifically, the program according to the embodiment is a program which causes the staff terminal 1 (the information processing device 10 functioning as the staff terminal 1) to execute an event data management process which includes a process for storing image data received via communication with the imaging device 2 and additional information containing at least rating information corresponding to the image data, both as the event data 60 associated with a specific event, and an update process for updating the event data 60 according to operation input, a UI control process which controls presentation of the images and the rating information associated with the event data 60 of the specific event, and detects the operation input, and a communication control process which controls communication with the server device 4 disposed outside for synchronization between the event data 60 and event data 90 according to storage or update of the event data 60.

The staff terminal 1 described above can be implemented under the foregoing program in the form of a portable terminal device, a personal computer, or other devices capable of executing information processing, for example.

The program described above for implementing the staff terminal 1 may be recorded in advance in an HDD as a built-in recording medium of a device such as a computer device, a ROM in a microcomputer having a CPU, or the like.

Alternatively, the program may be stored (recorded) temporarily or permanently in a removable recording medium such as a flexible disk, a CD-ROM (Compact Disc Read Only Memory), an MO (Magneto Optical) disk, a DVD (Digital Versatile Disc), a Blu-ray disc (Blu-ray Disc (registered trademark)), a magnetic disk, a semiconductor memory, and a memory card. Such a removable recording medium may be provided as what is generally called package software.

Moreover, the program described above may be installed in a personal computer or the like from the removable recording medium, or may be downloaded via such a network as a LAN (Local Area Network) and the Internet from a download site.

Furthermore, the program described above is applicable to a wide range of supply of the staff terminal 1 according to the embodiment. For example, the program may be downloaded to a portable terminal device such as a smartphone and a tablet, a cellular phone, a personal computer, a game console, a video device, and a PDA (Personal Digital Assistant) to allow the smartphone or the like to function as the staff terminal 1 of the present disclosure.

Note that the advantageous effects described in the present description are presented only by way of example. Advantageous effects to be produced are not limited to these examples, and may include other advantageous effects.

Note that the present technology may also have the following configurations.
(1) An information processing method performed by an information processing device, the method including:
   an event data management process that performs a process for storing image data received via communication with an imaging device and additional information containing at least rating information corresponding to the image data, both as event data associated with a specific event, and an update process for updating the event data according to operation input;
   a user interface control process that controls presentation of images and the rating information associated with the event data of the specific event, and detects the operation input; and
   a communication control process that controls communication for synchronizing the event data of the information processing device with event data of a server device disposed outside, according to storage or update of the event data of the information processing device.
(2) The information processing method according to (1) described above, in which, as event data management process, a process for acquiring the event data of the specific event from the server device in response to selection of the specific event is performed.
(3) The information processing method according to (1) or (2) described above, in which
   the event data contains prior setting information, and,
   as the user interface control process, control of image display of the image data contained in the event data is performed in reference to editing image data edited according to editing information contained in the prior setting information.
(4) The information processing method according to any one of (1) to (3) described above, in which,
   as the user interface control process, control for providing a user interface that allows an input operation for inputting editing information associated with the image data contained in the event data is performed, and,
   as the event data management process, a process for updating the event data according to the input operation for inputting the editing information is performed.
(5) The information processing method according to any one of (1) to (4) described above, in which,
   as the user interface control process, control for providing a user interface that allows an input operation for inputting rating information associated with the image data contained in the event data is performed, and,
   as the event data management process, a process for updating the event data according to the input operation for inputting the rating information is performed.
(6) The information processing method according to any one of (1) to (5) described above, in which,
   as the user interface control process, control for providing a user interface that allows a setting operation for setting selection information for selective use of the image data contained in the event data and creation of an image collection is performed, and,
   as the event data management process, a process for updating event data according to the setting operation of the selection information is performed.
(7) The information processing method according to (6) described above, in which the selection information contains use image information indicating selection as an image to be included in the image collection.
(8) The information processing method according to (6) or (7) described above, in which the selection information contains cover image information indicating selection as a cover image of the image collection.
(9) The information processing method according to any one of (6) to (8) described above, in which the selection information contains emphasis display image information indicating selection as an image to be displayed with emphasis in the image collection.
(10) The information processing method according to any one of (6) to (9) described above, further including:
   an automatic setting process that automatically sets the selection information in reference to tendency information generated in reference to previous selection information associated with a user.
(11) The information processing method according to any one of (6) to (10) described above, further including:
   an automatic setting process that automatically sets the selection information in reference to tendency information generated according to preference of a client user.
(12) A server device including:
   an event data management unit that stores event data containing image data and rating information corresponding to the image data and manages update of the event data, in response to reception of information associated with a specific event from a terminal device.
(13) The terminal device according to (12) described above, further including:
   an event data supply control unit that causes transmission for supply of the event data to the terminal device to be performed.
(14) The server device according to (12) or (13) described above, in which the event data management unit stores the event data that contains selection information or editing information corresponding to the image data, and manages update of the event data, in response to reception of information associated with the specific event from the terminal device.
(15) The server device according to (14) described above, further including:
   an image collection creation unit that creates image collection data associated with the specific event, by using the selection information and the editing information.
(16) The server device according to (14) or (15) described above, in which the selection information contains use image information indicating selection as an image to be included in the image collection.
(17) The server device according to any one of (14) to (16) described above, in which the selection information contains cover image information indicating selection as a cover image of the image collection.
(18) The server device according to any one of (14) to (17) described above, in which the selection information contains emphasis display image information indicating selection as an image to be displayed with emphasis in the image collection.
(19) The server device according to any one of (12) to (18) described above, further including:
   a data output unit that transmits all or a part of the event data to the terminal device as a file in a predetermined format.
(20) An information processing method performed by a terminal device, the method including:
   an event data management process that performs a process for storing image data received via communication with an imaging device and additional information containing at least rating information corresponding to the image data, both as event data associated with a specific event, and an update process for updating the event data according to operation input;
   a user interface control process that controls presentation of images and the rating information associated with the event data of the specific event, and detects the operation input; and
   a communication control process that controls communication for synchronizing the event data of the terminal device with event data of a server device disposed outside, according to storage or update of the event data of the terminal device.
(21) A program that causes a terminal device to execute:
   an event data management process that performs a process for storing image data received via communication with an imaging device and additional information containing at least rating information corresponding to the image data, both as event data associated with a specific event, and performs an update process for updating the event data according to operation input;
   a user interface control process that controls presentation of images and the rating information associated with the event data of the specific event, and detects the operation input; and
   a communication control process that controls communication for synchronizing the event data of the terminal device with event data of a server device disposed outside, according to storage or update of the event data of the terminal device.
   Moreover, the present technology may further have the following configurations.
(22) A terminal device including:
   an event data management unit that performs a process for storing image data received via communication with an imaging device and additional information containing at least rating information corresponding to the image data, both as event data associated with a specific event, and an update process for updating the event data according to operation input;
   a user interface control unit that controls presentation of images and the rating information associated with the event data of the specific event, and detects the operation input; and
   a communication control unit that controls communication for synchronizing the event data of the terminal device with event data of a server device disposed outside, according to storage or update of the event data of the terminal device.
(23) The terminal device according to (22) described above, in which the event data management unit acquires the event data of the specific event from the server device in response to selection of the specific event.
(24) The terminal device according to (22) or (23) described above, in which
   the event data contains prior setting information, and
   the user interface control unit controls image display of the image data contained in the event data, in reference to editing image data edited according to editing information contained in the prior setting information.
(25) The terminal device according to any one of (22) to (24) described above, in which
   the user interface control unit performs control for providing a user interface that allows an input operation for inputting editing information associated with the image data contained in the event data, and
   the event data management unit performs a process for updating the event data according to the input operation for inputting the editing information.
(26) The terminal device according to any one of (22) to (25) described above, in which
   the user interface control unit performs control for providing a user interface that allows an input operation for inputting rating information associated with the image data contained in the event data, and
   the event data management unit performs a process for updating the event data according to the input operation for inputting the rating information.
(27) The terminal device according to any one of (22) to (26) described above, in which
   the user interface control unit performs control for providing a user interface that allows a setting operation for setting selection information for selective use of the image data contained in the event data and creation of an image collection, and
   the event data management unit performs a process for updating event data according to the setting operation of the selection information.
(28) The terminal device according to (27) described above, in which the selection information contains use image information indicating selection as an image to be included in the image collection.
(29) The terminal device according to (27) or (28) described above, in which the selection information contains cover image information indicating selection as a cover image of the image collection.
(30) The terminal device according to any one of (27) to (29) described above, in which the selection information contains emphasis display image information indicating selection as an image to be displayed with emphasis in the image collection.
(31) The terminal device according to any one of (27) to (30) described above, further including:
   an automatic setting unit that performs a process for automatically setting the selection information in reference to tendency information generated in reference to previous selection information associated with a user.
(32) The terminal device according to any one of (27) to (31) described above, further including:
   an automatic setting unit that performs a process for automatically setting the selection information in reference to tendency information generated according to preference of a client user.

### [Reference Signs List]

- 1:: Staff terminal
- 2:: Imaging device
- 3:: Personal computer
- 4:: Server device
- 5:: Client terminal
- 6:: Network
- 10:: Information processing device
- 30:: Event data management unit
- 31:: UI control unit
- 32:: Communication control unit
- 33:: Automatic setting unit
- 40:: Event data management unit
- 41:: Image collection creation unit
- 42:: Event data supply control unit
- 43:: Data output unit
- 44:: Tendency information generation unit
- 60:: Event data
- 61:: Prior setting information
- 62:: Imaging and editing information table
- 63:: Tendency information
- 71:: CPU
- 90:: Event data
- 91:: Prior setting information
- 92:: Imaging and editing information table
- 95:: Web gallery data
- 96:: Web page setting information
- 97:: Image folder

## Claims

1. An information processing method performed by an information processing device, the method comprising:
an event data management process that performs a process for storing image data received via communication with an imaging device and additional information containing at least rating information corresponding to the image data, both as event data associated with a specific event, and an update process for updating the event data according to operation input;
a user interface control process that controls presentation of images and the rating information associated with the event data of the specific event, and detects the operation input; and
a communication control process that controls communication for synchronizing the event data of the information processing device with event data of a server device disposed outside, according to storage or update of the event data of the information processing device.

2. The information processing method according to claim 1, wherein, as the event data management process, a process for acquiring the event data of the specific event from the server device in response to selection of the specific event is performed.

3. The information processing method according to claim 1, wherein
the event data contains prior setting information, and,
as the user interface control process, control of image display of the image data contained in the event data is performed in reference to editing image data edited according to editing information contained in the prior setting information.

4. The information processing method according to claim 1, wherein,
as the user interface control process, control for providing a user interface that allows an input operation for inputting editing information associated with the image data contained in the event data is performed, and,
as the event data management process, a process for updating the event data according to the input operation for inputting the editing information is performed.

5. The information processing method according to claim 1, wherein,
as the user interface control process, control for providing a user interface that allows an input operation for inputting rating information associated with the image data contained in the event data is performed, and,
as the event data management process, a process for updating the event data according to the input operation for inputting the rating information is performed.

6. The information processing method according to claim 1, wherein,
as the user interface control process, control for providing a user interface that allows a setting operation for setting selection information for selective use of the image data contained in the event data and creation of an image collection is performed, and,
as the event data management process, a process for updating event data according to the setting operation of the selection information is performed.

7. The information processing method according to claim 6, wherein the selection information contains use image information indicating selection as an image to be included in the image collection.

8. The information processing method according to claim 6, wherein the selection information contains cover image information indicating selection as a cover image of the image collection.

9. The information processing method according to claim 6, wherein the selection information contains emphasis display image information indicating selection as an image to be displayed with emphasis in the image collection.

10. The information processing method according to claim 6, further comprising:
an automatic setting process that automatically sets the selection information in reference to tendency information generated in reference to previous selection information associated with a user.

11. The information processing method according to claim 6, further comprising:
an automatic setting process that automatically sets the selection information in reference to tendency information generated according to preference of a client user.

12. A server device comprising:
an event data management unit that stores event data containing image data and rating information corresponding to the image data and manages update of the event data, in response to reception of information associated with a specific event from a terminal device.

13. The server device according to claim 12, further comprising:
an event data supply control unit that causes transmission for supply of the event data to the terminal device to be performed.

14. The server device according to claim 12, wherein the event data management unit stores the event data that contains selection information or editing information corresponding to the image data, and manages update of the event data, in response to reception of information associated with the specific event from the terminal device.

15. The server device according to claim 14, further comprising:
an image collection creation unit that creates image collection data associated with the specific event, by using the selection information and the editing information.

16. The server device according to claim 14, wherein the selection information contains use image information indicating selection as an image to be included in the image collection.

17. The server device according to claim 14, wherein the selection information contains cover image information indicating selection as a cover image of the image collection.

18. The server device according to claim 14, wherein the selection information contains emphasis display image information indicating selection as an image to be displayed with emphasis in the image collection.

19. The server device according to claim 12, further comprising:
a data output unit that transmits all or a part of the event data to the terminal device as a file in a predetermined format.

20. An information processing method performed by a terminal device, the method comprising:
an event data management process that performs a process for storing image data received via communication with an imaging device and additional information containing at least rating information corresponding to the image data, both as event data associated with a specific event, and an update process for updating the event data according to operation input;
a user interface control process that controls presentation of images and the rating information associated with the event data of the specific event, and detects the operation input; and
a communication control process that controls communication for synchronizing the event data of the terminal device with event data of a server device disposed outside, according to storage or update of the event data of the terminal device.

21. A program that causes a terminal device to execute:
an event data management process that performs a process for storing image data received via communication with an imaging device and additional information containing at least rating information corresponding to the image data, both as event data associated with a specific event, and performs an update process for updating the event data according to operation input;
a user interface control process that controls presentation of images and the rating information associated with the event data of the specific event, and detects the operation input; and
a communication control process that controls communication for synchronizing the event data of the terminal device with event data of a server device disposed outside, according to storage or update of the event data of the terminal device.
